# EUROPÄISCHE PATENTSCHRIFT

(11) **EP 4 244 958 B1**
(45) Veröffentlichungstag und Bekanntmachung des Hinweises auf die Patenterteilung: **26.02.2025**
(21) Anmeldenummer: 22713265.1
(22) Anmeldetag: 19.01.2022
(51) Int. Cl.: H02K 3/12, H02K 15/00, H02K 15/06

(54) **VERFAHREN ZUM FORMEN UND EINBRINGEN VON SPULEN IN EINEN STATOR EINER ELEKTRISCHEN ROTIERENDEN MASCHINE**
METHOD FOR SHAPING AND INTRODUCING COILS INTO A STATOR OF AN ELECTRIC ROTATING MACHINE
PROCÉDÉ DE MISE EN FORME ET D'INTRODUCTION DE BOBINES DANS UN STATOR D'UNE MACHINE ÉLECTRIQUE TOURNANTE

(30) Priorität: 29.01.2021 DE 102021200844
(43) Veröffentlichungstag der Anmeldung: 20.09.2023
(73) Patentinhaber: Siemens Mobility GmbH, 81739 München (DE)
(72) Erfinder: LUTZ, Willi, 91639 Wolframs-Eschenbach (DE); SAFA, Bülent, 91207 Lauf (DE); WAFFLER, Harald, 90537 Feucht (DE); WENDT, Jan, 90489 Nürnberg (DE)
(74) Vertreter: Siemens Patent Attorneys
(86) Internationale Anmeldenummer: PCT/EP2022/051142
(87) Internationale Veröffentlichungsnummer: WO 2022/161830

(56) Entgegenhaltungen:
- DE-A1- 102018 104 838
- US-A1- 2007 143 983
- US-A1- 2013 009 509
- US-A1- 2014 201 979
- US-A1- 2019 393 748

## Beschreibung

Die Erfindung betrifft ein Verfahren zum Formen und Einbringen von Spulen in einen Stator einer elektrischen rotierenden Maschine, ein entsprechendes Werkzeug sowie eine Verwendung eines derartigen Werkzeugs.

Elektrische rotierende Maschinen mit einer Nennleistung von mehreren hundert bis über eintausend Kilowatt werden insbesondere als Antriebs- bzw. Traktionsmotoren in Schienenfahrzeugen wie Triebzügen für den Regional- und Fernverkehr sowie Lokomotiven eingesetzt. Solche Maschinen bestehen üblicherweise aus einem Stator mit einem ringförmigen Statorkern und einem in dessen Statorinnenraum angeordneten Rotor. Der Stator ist üblicherweise als ein Blechpaket mit einer Mehrzahl durch Statorzähne gebildete offener Statornuten aufgebaut. In den Statornuten sind Spulen einer oder mehrerer Wicklungen angeordnet. Bei Synchron- und Asynchron-Drehstrommaschinen speist üblicherweise ein Stromrichter drei Phasen einer Wicklung.

Eine Spule besteht aus einer oder mehreren Windungen, wobei jede Windung wiederum aus einem Draht oder mehreren parallel geschalteten Drähten, insbesondere Flachdrähten, besteht und zwei Windungsseiten entsprechend einem Hin- und einem Rückleiter aufweist. Sofern eine Spule mehrere Windungen umfasst, sind diese innerhalb der Spule seriell geschaltet. Entsprechend der Windung bzw. den mehreren Windungen weist auch die Spule zwei Spulenseiten auf, welche in zwei unterschiedlichen Statornuten liegen und einen bestimmten Nutsprung, d.h. eine Anzahl Statornuten in Umfangrichtung des Statorkerns, voneinander entfernt liegen. Vorzugsweise sind Spulenseiten von zwei Spulen in einer jeweilige Statornut übereinander angeordnet. Der außerhalb des Statorkerns liegende Teil der Spule, welcher die beiden Spulenseiten miteinander verbindet, wird als Spulenkopf bezeichnet. Weiterhin weist die Spule einen Spulenanschluss im Bereich eines Spulenkopfes auf. Die verteilte Anordnung der Spulenseiten in unterschiedlichen Statornuten, auch als verteilte Wicklung bezeichnet, führt dazu, dass sich Spulenköpfe mehrerer Spulen überlappen. Eine verteilte Wicklung eignet sich grundsätzlich sowohl für Synchron- als auch für Asynchron-Drehstrommaschinen.

Insbesondere bei elektrischen Maschinen der genannten Leistungsklassen mit einer verteilten Wicklung kommen so genannte Formspulen zum Einsatz. Eine Formspule besteht beispielsweise aus einer gestapelten Mehrzahl Windungen, welche jeweils aus einem Flachdraht aus Kupfer bestehen und jeweils eine elektrische Isolierung beispielsweise in Form einer Folie oder eines Schutzlacks aufweisen. Das Formen einer Formspule erfolgt in mehreren Schritten, wobei in einem ersten Formungsschritt aus den Windungen zunächst eine zweidimensionale plane Spule geformt wird, bei welcher die Spulenseiten und Spulenköpfe in einer Ebene angeordnet sind. In einem nachfolgenden zweiten Formungsschritt wird die Spule in eine dreidimensionale räumliche Spule umgeformt, bei welcher die Spulenseiten entsprechend dem gewünschten Nutsprung voneinander beabstandet sind. Für eine elektrische Isolierung der Spule ist diese beispielsweise mit einer oder mehreren Lagen eines Glimmerbands umwickelt, welches eine Erhöhung der Nässeresistenz sowie der Wärmeklasse der Spule bewirkt, sowie mit einer oder mehreren Lagen eines Gewebebands umwickelt, welches ergänzend einen mechanischen Schutz der Spule verwirklicht. Die Umwicklung erfolgt dabei beispielsweise vor dem ersten oder vor dem zweiten Formungsschritt. Die geformten und umwickelten Spulen werden anschließend in Statornuten eingebracht bzw. eingelegt, wobei dies üblicherweise manuell durch eine Montagefachkraft erfolgt.

US 2013/009509 A1 offenbart Herstellungsverfahren eines Stators für eine elektrische Rotationsmaschine, wobei das Verfahren die folgenden Schritte aufweist:
Vorbereiten eines ringförmigen Statorkerns mit einer Vielzahl von Schlitzen, die entlang einer Umfangsrichtung angeordnet sind, wobei jeder der Schlitze eine Öffnung hat, die in einem Innenumfang des Statorkerns öffnet, wobei ein Schlitzabstand zwischen benachbarten Schlitzen nach außen in einer radialen Richtung des Statorkerns ansteigt;
Vorbereiten einer Vielzahl von Wicklungen, wobei im Voraus jede der Wicklungen eine geschlossene Schleife mit einem leitenden Draht ausbildet und zwei Wicklungsenden, eine erste Seite und eine zweite Seite hat, die in die Schlitze eingeführt werden, wobei die zwei Wicklungsenden flexibel sind und die erste Seite und die zweite Seite in einer im Voraus festgelegten Lagebeziehung sind, um einer Lagebeziehung zu entsprechen, wenn die erste Seite und die zweite Seite in den Schlitzen eingeführt sind;
Vorbereiten einer Haltevorrichtung, die an einer radialen Innenseite des Statorkerns angeordnet werden kann, wobei, in einem an der radialen Innenseite des Statorkerns angeordneten Zustand, die Haltevorrichtung Haltenuten in einem Umfang an Stellen hat, die jeweils der Öffnung gegenüberliegen, und wobei die Haltevorrichtung ferner zwei Endflächen an ihren zwei axialen Enden hat;
Koppeln jeder der Wicklungen an die Haltevorrichtung durch Einführen der zweiten Seiten in die Haltenuten, wobei, beim Betrachten der Haltevorrichtung von ihrer axialen Richtung in dem gekoppelten Zustand, die ersten Seiten nach außen in einer radialen Richtung der Haltevorrichtung liegen, mindestens eins der zwei Wicklungsenden einen ersten Abschnitt, der in einem Bereich der ersten Seite liegt, und einen von dem ersten Abschnitt verschiedenen zweiten Abschnitt hat, und wobei der zweite Abschnitt an einem Abschnitt an einer der zwei Endflächen liegt, der den Haltenuten entspricht;
Bewegen eines von dem Statorkern und der Haltevorrichtung relativ zu dem anderen in der axialen Richtung, in einem Zustand, in dem die Achse der Haltevorrichtung und die Achse des Statorkerns miteinander fluchten, um die Haltevorrichtung an der radialen Innenseite des Statorkerns anzuordnen und dadurch die erste Seite in den Schlitz einzuführen;
Drehen eines von dem Statorkern und der Haltevorrichtung relativ zu dem anderen, so dass die in jede Haltenut eingeführte zweite Seite dem Schlitz gegenüberliegt, in dem die zweite Seite eingeführt werden soll; und
Einführen der zweiten Seite in den Schlitz mit einem Auswurfabschnitt durch Aufbringen einer Auswurfkraft auf die Wicklung, die die zweite Seite von der Haltenut in den entsprechenden Schlitz zwingt.

Sowohl die Formung der dreidimensionalen Formspulen als auch deren Montage in dem Stator der elektrischen Maschine erfordern nachteilig einen hohen Fertigungs- und Zeitaufwand.

Es ist daher eine Aufgabe der Erfindung, ein Verfahren sowie ein geeignetes Werkzeug anzugeben, welche ein aufwandsgeringeres Formen und Einbringen von Spulen in einem Stator ermöglichen. Diese Aufgabe wird durch die jeweiligen Merkmale der unabhängigen Patentansprüche gelöst. Weiterbildungen sind jeweiligen abhängigen Patentansprüchen entnehmbar.

Ein erster Aspekt der Erfindung betrifft ein Verfahren zum Formen und Einbringen von Spulen in einen Stator einer elektrischen rotierenden Maschine, wobei der Stator einen Statorkern zur Aufnahme eines um eine Rotationsachse drehbaren Rotors in einem zylindrischen Statorinnenraum aufweist, und wobei der Statorkern an seiner radialen Innenseite eine Mehrzahl Statornuten zur Aufnahme einer Mehrzahl Spulen aufweist,
mit zumindest folgenden Schritten:
a) Formen der Spulen in eine jeweilige Grundform, wobei die Grundform eine erste Spulenseite und eine zweite Spulenseite aufweist, deren Enden durch einen jeweiligen Spulenkopf miteinander verbunden sind, und die erste Spulenseite und die zweite Spulenseite parallel in einer Ebene angeordnet sind,
b) Bestücken der Statornuten mit den ersten Spulenseiten,
c) Anordnen, in einer bezüglich der Rotationsachse ersten Position, eines Werkzeugs in dem Stator, wobei das Werkzeug einen zylindrischen Werkzeugkörper mit einer der Mehrzahl Spulen entsprechenden Mehrzahl äußere Werkzeugnuten aufweist, welche die zweiten Spulenseiten aufnehmen, und relativ zu dem Stator um die Rotationsachse drehbar ist, und wobei das Werkzeug ferner zumindest eine Spulenfixierung an einer Stirnseite des Werkzeugkörpers mit einer der Mehrzahl äußere Werkzeugnuten entsprechenden Mehrzahl Fixierungsnuten aufweist,
d) Ausführen einer Drehbewegung des Werkzeugs relativ zu dem Stator um die Rotationsachse, wodurch die Spulenköpfe geformt werden, und
e) Einbringen, in einer bezüglich der Rotationsachse zweiten Position, der zweiten Spulenseiten in die Statornuten mittels des Werkzeugs.

Erfindungsgemäß werden nach dem Schritt c) und vor dem Schritt d) die zweiten Spulenseiten mittels der Spulenfixierung in den äußeren Werkzeugnuten fixiert werden, und nach dem Schritt d) und vor dem Schritt e) die Fixierung wieder gelöst wird. Dabei weist die Spulenfixierung einen mit dem Querschnitt des Werkzeugkörpers im Wesentlichen identischen Querschnitt auf. In einer Ausgangsposition des Werkzeugs, in welcher es in den Statorinnenraum eingeführt wird, sind die Fixierungsnuten zunächst derart ausrichtet, dass sie zusammen mit den äußeren Werkzeugnuten des Werkzeugkörpers durchgängige Werkzeugnuten einheitlicher Breite bilden. Dabei ist die Spulenfixierung ausgestaltet, in der ersten Position die zweiten Spulenseiten mittels einer Drehung um die Rotationsachse relativ zu dem Werkzeugkörper in den äußeren Werkzeugnuten zu fixieren. Außerdem ist die Spulenfixierung ausgestaltet, die zweiten Spulenseiten mittels einer Drehung relativ zu dem Werkzeugkörper in die entgegengesetzte Richtung zu lösen.

Durch Einsatz des erfindungsgemäßen Werkzeugs wird der bislang für jede Spule gesondert durchzuführende zweite Formungsschritt, d.h. das Umformen der zweidimensionalen Spule in eine dreidimensionale Spule, durch einen für alle Spulen gemeinsamen und gleichzeitigen Schritt ersetzt, wodurch der für die dreidimensionale Formung der Formspulen erforderliche Aufwand vorteilhaft deutlich reduziert wird. Ebenso vorteilhaft wird durch das Einbringen der Spulenseiten in die Statornuten mittels des Werkzeugs der manuelle Aufwand deutlich reduziert.

Erfindungsgemäß werden die Spulen des Stators der elektrischen Maschine zunächst in eine zweidimensionale Grundform geformt. Diese Formung erfolgt insbesondere entsprechend dem einleitend beschriebenen ersten Formungsschritt für Formspulen. Eine erste Spulenseite der derart geformten Spulen wird anschließend durch beispielsweise eine Montagefachkraft oder automatisiert in eine jeweilige erste Statornut eingebracht bzw. eingelegt. Die Statornut kann dabei beispielsweise mit einer Nutisolierung aus einem Aramidpapier ausgekleidet oder mit einer elektrisch isolierenden Lackschicht versehen sein. Vorzugsweise wird die erste Spulenseite in dem Nutgrund der Statornut, d.h. im radial inneren Bereich der Statornut, angeordnet, während der radial äußere Bereich der Statornut zunächst freibleibt. Die zweite Spulenseite ragt hingegen über die Nutöffnung der Statornut hinaus in den Statorinnenraum. Der Statorinnenraum ist dabei in radialer Richtung durch die radiale Innenseite des Statorkerns sowie in axialer Richtung durch die Stirnseiten des Statorkerns begrenzt.

Das erfindungsgemäße Werkzeug wird nun in dem Statorinnenraum angeordnet, beispielsweise durch Einführen des Werkzeugs von einer Stirnseite des Statorkerns. Die äußeren Werkzeugnuten des Werkzeugkörpers sowie die Fixierungsnuten der Spulenfixierung sind dabei derart ausgerichtet, dass sie während des Einführens des Werkzeugs die zweiten Spulenseiten aufnehmen und dass ein möglichst einheitlicher Luftspalt über den gesamten Umfang des Werkzeugkörpers existiert.

Mittels der Spulenfixierung werden die zweiten Spulenseiten anschließend in den äußeren Werkzeugnuten fixiert, d.h. ortsfest in den äußeren Werkzeugnuten angeordnet. Dabei kann das Werkzeug an jeder Stirnseite eine Spulenfixierungen aufweisen, um eine gleichmäßige der Spulenseiten über deren gesamte Länge bei der Drehbewegung in Schritt d) zu erzielen. Nach dem Formen der Spulenköpfe wird die Fixierung der zweiten Spulenseiten wieder aufgehoben, sodass diese im nachfolgenden Schritt e) von dem Werkzeug ungehindert mittels des Werkzeugs in die Statornuten eingebracht werden können.

Die Drehbewegung des Werkzeugs relativ zu dem Stator in Schritt e), welche mittels einer Drehung des Werkzeugkörpers und/oder des Stators erfolgen kann, resultiert vorteilhaft in einer gleichzeitigen und gleichmäßigen Formung der Spulenköpfe aller Spulen. Die relative Drehung erfolgt dabei um einen bestimmten Winkel, welcher der Differenz zwischen der ersten rotatorischen Position und der zweiten rotatorischen Position bzw. dem gewünschten Nutsprung, d.h. dem Abstand der Statornuten, in denen die Spulenseiten einer Spule schließlich angeordnet sind, entspricht.

In Schritt e) werden schließlich in der zweiten rotatorischen Position alle zweiten Spulenseiten der Spulen in die Statornuten mittels des Werkzeugs eingebracht. Das Werkzeug dient somit ergänzend dazu, die zweiten Spulenseiten aus den äußeren Werkzeugnuten auszubringen und in die Statornuten einzubringen. Die von dem Werkzeug verursachte Bewegung der zweiten Spulenseiten in radialer Richtung führt zu einer weiteren Formung der Spulenköpfe. Durch Einsatz des erfindungsgemäßen Werkzeugs wird der bislang für jede Spule gesondert durchzuführende zweite Formungsschritt, d.h. das Umformen der zweidimensionalen Spule in eine dreidimensionale Spule, somit durch zwei für alle Spulen gemeinsame und gleichzeitige Schritte ersetzt, wodurch der für die dreidimensionale Formung der Spulen erforderliche Aufwand vorteilhaft deutlich reduziert wird.

Die Spulenköpfe der Spulen werden in der Grundform vorzugsweise derart geformt, dass diese nach der Bestückung in den Statornuten nicht über die zweiten Spulenseiten in radialer Richtung bzw. über eine Tiefe der äußeren Werkzeugnuten hinausragen, sodass das Werkzeug kollisionsfrei in den Statorinnenraum eingeführt werden kann.

Nach dem Formen der jeweiligen Spule in Schritt a) in eine Grundform weisen die parallelen erste und die zweite Spulenseiten beispielsweise einen bestimmten Abstand zueinander auf. Dieser Abstand ist dabei vorzugsweise derart bemessen, dass der Luftspalt zwischen der radialen Innenseite des Statorkerns und der radialen Außenseite des Werkzeugkörpers möglichst vollständig überbrückt wird. Damit wird verhindert, dass es während der Drehbewegung in Schritt d) zu einem möglichen Schleifen der zweiten Spulenseite an dem Statorkern kommt, wodurch eine Isolierung der Spule oder die Spule selbst beschädigt werden könnte, oder sich die zweite Spulenseite im Bereich des Luftspalts verkantet und damit die Drehbewegung nicht abgeschlossen werden kann.

Die Spulen werden beispielsweise vor dem Schritt a) oder nach dem Schritt a) und vor dem Schritt b) mit einem Isoliermaterial, insbesondere mit einem folienartigen Isoliermaterial sowie ergänzend einem Gewebeband, umwickelt. Die Umwicklung der Spule mit einem Isoliermaterial dient einerseits der elektrischen Isolierung der Spulenseiten gegenüber dem Statorkern, andererseits einer Wärmeabfuhr der sich während des Betriebs der elektrischen Maschine aufgrund des Stromflusses erwärmenden Spulen in den Statorkern, welcher in bekannter Weise aktiv oder passiv gekühlt wird. Vorzugsweise werden sowohl die Spulenseiten als auch die Spulenköpfe vor dem Einbringen in die äußere Werkzeugnut vollständig mit einem Isoliermaterial umwickelt, bevor die Spulenköpfe in Schritt d) und e) geformt werden und dann nur noch schwer zugänglich sind.

Die Anzahl äußere Werkzeugnuten des Werkzeugs entspricht vorzugsweise der Anzahl Statornuten, sodass nach Schritt e) Spulenseiten von zwei Spulen in einer jeweilige Statornut angeordnet sind, speziell eine erste Spulenseite einer ersten Spule unterhalb einer zweiten Spulenseite einer zweiten Spule in einer jeweiligen Statornut angeordnet ist. Alternativ kann die Anzahl äußere Werkzeugnuten des Werkzeugs nur einer Hälfte der Anzahl Statornuten entsprechen, sodass nach Schritt e) des Verfahrens in jeder der Statornuten nur eine Spulenseite angeordnet ist. Letzteres Ergebnis kann ebenso bei Einsatz des ersteren Werkzeugs erzielt werden, wenn nur in jeder zweiten Statornut und äußeren Werkzeugnut eine Spule angeordnet wird.

Die äußere Werkzeugnut des Werkzeugs weist eine Tiefe in radialer Richtung auf, die derart bemessen ist, dass die zweite Spulenseite vollständig in dieser angeordnet werden kann. Vorzugsweise ist diese Tiefe jedoch derart bemessen, dass die zweite Spulenseite im Bereich der Nutöffnung, d.h. im radial äußeren Bereich der äußeren Werkzeugnut angeordnet ist, wodurch der erforderliche Hub der Bewegung zum Einbringen der zweiten Spulenseite in die Statornut nach Schritt e) minimiert werden kann.

Eine Länge der Spulenseiten der jeweiligen Spule entspricht vorzugsweise zumindest der Länge des Statorkerns in axialer Richtung. Der Werkzeugkörper zusammen mit einer an dessen einen oder beiden Stirnseiten angeordneten Spulenfixierung bzw. Spulenfixierungen weist ebenfalls eine Gesamtlänge auf, die in axialer Richtung vorzugsweise ebenfalls zumindest der Länge des Statorkerns entspricht. Hierdurch wird vorteilhaft verhindert, dass es bei der Formung der Spulenköpfe in Schritt d) zu einer Verformung eines Teils der zweiten Spulenseite kommt, welche im nachfolgenden Schritt e) ein Einbringen der zweiten Spulenseite in die zweite Statornut verhindern könnte.

Gemäß einer Weiterbildung des Verfahrens weist das Werkzeug ferner eine Mehrzahl erste Werkzeugteile, welche in den äußeren Werkzeugnuten jeweils radial unterhalb einer zweiten Spulenseite bewegbar angeordnet sind, eine Mehrzahl innere Werkzeugnuten, welche radial unterhalb der äußeren Werkzeugnuten in dem Werkzeugkörper angeordnet sind, und eine Mehrzahl zweite Werkzeugteile, welche in den inneren Werkzeugnuten jeweils bewegbar angeordnet sind, auf. Dabei wird in Schritt e) von den zweiten Werkzeugteilen eine Bewegung ausgeführt, welche eine Bewegung der ersten Werkzeugteile in radialer Richtung bewirkt, wodurch die zweite Spulenseiten in die Statornuten eingebracht werden.

Gemäß einer weiteren Weiterbildung des Verfahrens werden in Schritt e) die zweiten Spulenseiten gleichzeitig oder nacheinander, insbesondere aufgeteilt in Gruppen einer jeweiligen Mehrzahl Spulen, in die Statornuten eingebracht.

Insbesondere ein gleichzeitiges Einbringen aller zweiten Spulenseiten ermöglicht ein vorteilhaftes Beschleunigen des Verfahrens, wobei entsprechend alle zweiten Werkzeugteile in den inneren Werkzeugnuten gleichzeitig bewegt werden müssen.

Gemäß einer weiteren Weiterbildung des Verfahrens werden die Spulen jeweils aus zumindest einer Windung eines Flachdrahts in die Grundform geformt, wobei der Flachdraht insbesondere eine Querschnittsfläche im Bereich zwischen einschließlich 4 mm² und einschließlich 30mm² aufweist. Eine Spulenseite kann entsprechend insbesondere eine Querschnittsfläche zwischen einschließlich 50mm² bis 300m² aufweisen.

Für Spulen von elektrischen Maschinen im einleitend genannten Bereich der Nennleistung verwendete Flachdrähte mit einem solchen Querschnitt erfordern hohe Kräfte für die Formung der Spulenköpfe, weshalb diese bislang zunächst in die dreidimensionale Form geformt und erst nach Formung in die Statornuten eingebracht wurden. Mittels des erfindungsgemäßen Werkzeugs können die Spulenköpfe jedoch in dem Schritt d) vorteilhaft gleichzeitig sowie zudem gleichmäßig geformt werden.

Gemäß einer weiteren Weiterbildung weist die Spulenfixierung einen mit dem Querschnitt des Werkzeugkörpers im Wesentlichen identischen Querschnitt auf, wobei die äußeren Werkzeugnuten des Werkzeugkörpers und die Fixierungsnuten der Spulenfixierung jeweils eine größere Breite in Umfangrichtung als die Statornuten aufweisen, und wird die Spulenfixierung zum Fixieren der zweiten Spulenseiten relativ zu dem Werkzeugkörper um die Rotationsachse gedreht.

Die größere Breite der äußeren Werkzeugnuten des Werkzeugkörpers sowie der Fixierungsnuten der Spulenfixierung ermöglicht vorteilhaft ein einfaches und sicheres Einführen des Werkzeugs in den Statorinnenraum, da das Risiko einer Beschädigung der über die radiale Innenseite des Statorkerns ragenden zweiten Spulenseiten bzw. deren Isolierungsumwicklung verringert wird. Während des Einbringens des Werkzeugs in den Statorinnenraum sind die äußeren Werkzeugnuten des Werkzeugkörpers und die Fixierungsnuten der Spulenfixierung zunächst einheitlich ausgerichtet, d.h. die äußeren Werkzeugnuten und Fixierungsnuten weisen eine einheitliche und maximale Breite über die Länge des Werkzeugs auf. Nach dem Einbringen des Werkzeugs in den Statorinnenraum wird die Breite der äußeren Werkzeugnuten beispielsweise dadurch verringert, dass die Spulenfixierung in eine der Drehbewegung in Schritt d) entgegengesetzte Richtung relativ zu dem Werkzeugkörper um die Rotationsachse gedreht wird. Hierdurch werden die zweiten Spulenseiten an die Flanke der äußeren Werkzeugnut angelegt, welche die zweite Spulenseite bei der Drehbewegung in Schritt d) führt. Vorteilhaft wird hierdurch wiederum eine gleichmäßige Formung der Spulenköpfe sichergestellt. Alternativ können, bei Anordnung einer jeweiligen Spulenfixierung an beiden Stirnseiten des Werkzeugkörpers, die Spulenfixierungen auch in die Richtung der Drehbewegung in Schritt d) um die Rotationsachse gedreht werden, sodass die zweiten Spulenseiten bei der Drehbewegung in Schritt d) von den Spulenfixierungen geführt werden.

Alternativ kann auch zunächst das Werkzeug soweit relativ zu dem Stator in Richtung der Drehbewegung in Schritt d) gedreht werden, dass die zweiten Spulenseiten an der genannten Flanke der äußeren Werkzeugnuten anliegen, und nachfolgend die Spulenfixierung in die entgegengesetzte Richtung gedreht werden, um die zweiten Spulenseiten in den äußeren Werkzeugnuten zu fixieren.

Vorzugsweise wird die Spulenfixierung nach der Fixierung der zweiten Spulenseiten in den äußeren Werkzeugnuten gegenüber dem Werkzeugkörper fixiert, um die effektive Breite der äußeren Werkzeugnuten während des Schritts d) konstant zu halten und eine Bewegung der zweiten Spulenseiten innerhalb der äußeren Werkzeugnuten zu verhindern.

Ein im Wesentlichen identischer Querschnitt der Spulenfixierung bedeutet beispielsweise, dass der Werkzeugkörper und die Spulenfixierung einen weitgehend gleichen Umfang aufweisen und/oder dass die äußeren Werkzeugnuten sowie die Fixierungsnuten eine weitgehend Breite in Umfangrichtung und Tiefe in radialer Richtung aufweisen. Insbesondere eine Tiefe der Fixierungsnuten kann jedoch auch geringer als die Tiefe der äußeren Werkzeugnuten sein, da in diesen keine ersten Werkzeugteile mit einer bestimmten Höhe angeordnet werden. Auch können die Fixierungsnuten eine größere Breite als die äußeren Werkzeugnuten aufweisen. Der im Wesentlichen identische Durchmesser ermöglicht insbesondere bei Vorsehen einer jeweiligen Spulenfixierung an beiden Stirnseiten des Werkzeugkörpers das Einführen des Werkzeugs in den Stator an einer Stirnseite des Stators. Der Werkzeugkörper und die Spulenfixierung können sich jedoch beispielsweise bezüglich der inneren Werkzeugnuten voneinander unterscheiden, beispielsweise indem Durchführungen in der Spulenfixierung mit einer Breite vorgesehen sind, welche eine Bewegung der zweiten Werkzeugteile auch nach erfolgter Drehung der Spulenfixierung relativ zu dem Werkzeugkörper zur Fixierung der zweiten Spulenseiten ermöglichen.

Ein zweiter Aspekt der Erfindung betrifft ein Werkzeug zum Formen und Einbringen von Spulen in einen Stator einer elektrischen rotierenden Maschine, wobei der Stator einen Statorkern aufweist, dessen zylindrischer Statorinnenraum einer Aufnahme eines um eine Rotationsachse drehbaren Rotors der Maschine dient und an dessen radialen Innenseite Statornuten zur Aufnahme erster und zweiter Spulenseiten einer Mehrzahl Spulen ausgebildet sind,
wobei das Werkzeug zumindest aufweist:
- einen zylindrischen Werkzeugkörper, welcher in dem ringförmigen Stator anordenbar und relativ zu dem Stator um eine Rotationsachse drehbar ist,
- eine Mehrzahl äußere Werkzeugnuten, welche an einer radialen Außenseite des Werkzeugkörpers angeordnet und jeweils ausgestaltet sind, zumindest ein innerhalb der äußeren Werkzeugnut in radialer Richtung bewegbares erstes Werkzeugteil sowie radial oberhalb des zumindest einen ersten Werkzeugteils eine zweite Spulenseite einer Spule aufzunehmen, und
- zumindest eine Spulenfixierung mit einer der Mehrzahl äußere Werkzeugnuten entsprechenden Mehrzahl Fixierungsnuten, wobei die Spulenfixierung an einer Stirnseite des Werkzeugkörpers angeordnet und relativ zu dem Werkzeugkörper um die Rotationsachse drehbar ist,
wobei
- die äußeren Werkzeugnuten ferner jeweils ausgestaltet sind, die zweite Spulenseite in einer bezüglich der Rotationsachse ersten Position des Werkzeugkörpers relativ zu dem Stator aufzunehmen, wobei eine erste Spulenseite der Spule in einer Statornut verbleibt,
- der Werkzeugkörper ferner ausgestaltet ist, eine Drehung von der ersten Position zu einer bezüglich der Rotationsachse zweiten Position relativ zu dem Stator auszuführen, um die erste und zweite Spulenseiten jeweils verbindenden Spulenköpfe der Spulen zu formen,
- die ersten Werkzeugteile ferner jeweils ausgestaltet sind, in der zweiten Position mittels einer Bewegung in radialer Richtung die zweite Spulenseite der Spule in eine Statornut einzubringen.

Erfindungsgemäß ist die Spulenfixierung ausgestaltet, in der ersten Position die zweiten Spulenseiten mittels einer Drehung um die Rotationsachse relativ zu dem Werkzeugkörper in den äußeren Werkzeugnuten zu fixieren. Dabei weist die Spulenfixierung einen mit dem Querschnitt des Werkzeugkörpers im Wesentlichen identischen Querschnitt auf. In einer Ausgangsposition des Werkzeugs, in welcher es in den Statorinnenraum eingeführt wird, sind die Fixierungsnuten zunächst derart ausrichtet, dass sie zusammen mit den äußeren Werkzeugnuten des Werkzeugkörpers durchgängige Werkzeugnuten einheitlicher Breite bilden. Dabei ist die Spulenfixierung ausgestaltet, in der ersten Position die zweiten Spulenseiten mittels einer Drehung um die Rotationsachse relativ zu dem Werkzeugkörper in den äußeren Werkzeugnuten zu fixieren. Außerdem ist die Spulenfixierung ausgestaltet, die zweiten Spulenseiten mittels einer Drehung relativ zu dem Werkzeugkörper in die entgegengesetzte Richtung zu lösen.

Die Anzahl erste Werkzeugteile kann der Anzahl äußere Werkzeugnuten entsprechen, wenn jede zweite Spulenseite mittels eines einzigen ersten Werkzeugteils in die Statornut eingebracht wird. Alternativ kann die Anzahl erste Werkzeugteile auch dem Doppelten der Anzahl äußere Werkzeugnuten entsprechen, wenn in jeder äußeren Werkzeugnut zwei erste Werkzeugteile, vorzugsweise jeweils im Bereich einer Stirnseite des Werkzeugkörpers angeordnet sind. Die ersten Werkzeugteile einer äußeren Werkzeugnut können gleichzeitig oder sequenziell bewegt werden. Eine Länge des ersten Werkzeugteils bzw. der ersten Werkzeugteile kann dabei beispielsweise weitgehend der Länge der äußeren Werkzeugnut entsprechen, wodurch vorteilhaft eine gleichmäßige Ausbringung der zweiten Spulenseite aus der äußeren Werkzeugnut erzielt werden kann.

Gemäß einer Weiterbildung des Werkzeugs weist das Werkzeug ferner innere Werkzeugnuten auf, welche radial unterhalb der äußeren Werkzeugnuten in dem Werkzeugkörper angeordnet sind, und eine Mehrzahl zweite Werkzeugteile, welche in den inneren Werkzeugnuten bewegbar angeordnet sind, wobei die ersten und zweiten Werkzeugteile jeweils ausgestaltet sind, mittels einer Bewegung des zweiten Werkzeugteils die Bewegung des ersten Werkzeugteils in der äußeren Werkzeugnut in radialer Richtung zu bewirken, wobei die zweiten Werkzeugteile insbesondere von zumindest einer Stirnseite des Werkzeugkörpers aus bewegbar sind.

Vorzugsweise entspricht die Anzahl innere Werkzeugnuten der Anzahl äußere Werkzeugnuten, sodass radial unterhalb jeder äußeren Werkzeugnut eine jeweilige innere Werkzeugnut angeordnet ist. Alternativ kann jedoch eine geringere Anzahl innere Werkzeugnuten als äußere Werkzeugnuten vorgesehen sein, wobei eine innere Werkzeugnut radial unterhalb mehrerer äußerer Werkzeugnuten angeordnet ist und jedes zweite Werkzeugteil somit erste Werkzeugteile in mehreren äußeren Werkzeugnuten bewegt.

Eine Länge des Werkzeugkörpers in axialer Richtung zusammen mit einer an dessen einen oder beiden Stirnseiten jeweils angeordneten Spulenfixierung bzw. eine Länge der äußeren Werkzeugnuten zusammen mit den Fixierungsnuten entspricht vorzugsweise zumindest der Länge des Statorkerns bzw. der Statornuten. Hierdurch wird verhindert, dass die zweiten Spulenseiten während des Formens der Spulenköpfe derart verformt werden, dass diese in dem nachfolgenden Schritt nicht mehr in die Statornuten eingebracht werden können.

Ein Luftspalt zwischen der radialen Außenseite des Werkzeugkörpers und der radialen Innenseite des Statorkerns bzw. zwischen den Nutöffnungen der äußeren Werkzeugnuten und den Nutöffnungen der Statornuten ist vorzugsweise derart bemessen, dass einerseits das Werkzeug einfach und sicher in dem Stator angeordnet werden kann, andererseits ein Formen der Spulenköpfe und nachfolgendes Einbringen der zweiten Spulenseiten in die Statornuten durch das Werkzeug ermöglicht wird. Vorzugsweise wird bei der Anordnung des Werkzeugs in dem Statorinnenraum sichergestellt, dass der Luftspalt konstant bzw. nahezu konstant über den gesamten Umfang ist.

Der Werkzeugkörper weist beispielsweise eine um die Rotationsachse symmetrisch und radial unterhalb der inneren Werkzeugnuten angeordnete zylindrische Durchführung auf, welche der Aufnahme einer Werkzeugwelle zur drehfesten oder drehbaren Lagerung des Werkzeugkörpers dient. Alternativ kann anstelle einer Durchführung jedoch an einer Stirnseite oder an beiden Stirnseiten des Werkzeugkörpers ein Zapfen aus dem Werkzeugkörpermaterial ausgebildet oder daran befestigt sein, welcher bzw. welche geeignet gelagert werden, um eine Drehung des Werkzeugkörpers um die Rotationsachse zu ermöglichen. Gemäß einer Weiterbildung des Werkzeugs weisen die ersten Werkzeugteile jeweils zumindest eine Finne und die zweiten Werkzeugteile jeweils zumindest einen Einschnitt auf, wobei die Finne und der Einschnitt ausgestaltet sind, dass eine Bewegung des zweiten Werkzeugteils in axialer Richtung die Bewegung des ersten Werkzeugteils in radialer Richtung bewirkt.

Beispielsweise weisen die Finne und der Einschnitt an aneinander liegenden Flanken bzw. Seiten jeweils eine bestimmte Steigung relativ zu der Rotationsachse auf, sodass eine Bewegung des zweiten Werkzeugteils in axialer Richtung ausschließlich eine Bewegung des ersten Werkzeugteils in radialer Richtung bewirkt.

Gemäß einer auf der vorstehenden Weiterbildung basierenden weiteren Weiterbildung des Werkzeugs ist in dem Werkzeugkörper zwischen einer äußeren Werkzeugnut und einer inneren Werkzeugnut ein Steg angeordnet, wobei der Steg zumindest eine Öffnung aufweist, welche die äußere Werkzeugnut mit der inneren Werkzeugnut räumlich verbindet, und ist die Finne des ersten Werkzeugteils ausgestaltet, durch die Öffnung hindurch in die innere Werkzeugnut zu ragen.

Gemäß dieser Weiterbildung ist die äußere Werkzeugnut durch einen sich insbesondere über die gesamte Länge des Werkzeugkörpers erstreckenden Steg, insbesondere aus dem Werkzeugkörpermaterial, von der inneren Werkzeugnut räumlich getrennt. Diese durch den Steg entstehende räumliche Trennung wird nach dieser Weiterbildung durch eine Anzahl Öffnungen aufgehoben, welche die Interaktion der ersten und zweiten Werkzeugteile ermöglichen. Über die Länge des Werkzeugkörpers können eine oder mehrere Öffnungen zwischen der äußeren Werkzeugnut und der inneren Werkzeugnut vorgesehen sein. Sofern der Steg eine die gesamte Länge umfassende Öffnung aufweist, beispielsweise wenn anstelle eines sich über die gesamte Breite der Werkzeugnut erstreckenden Stegs nur eine Verjüngung der Werkzeugnut vorgesehen ist, können die äußere und die innere Werkzeugnut auch einen gemeinsamen Raum bilden, dessen Teilbereiche allein durch die Anordnung der ersten und zweiten Werkzeugteile definiert sind.

Aufgrund des Stegs ist die innere Werkzeugnut nicht bzw. nur über die Öffnungen von radial außen zugänglich. Das zweite Werkzeugteil ist daher beispielsweise derart ausgestaltet, dass es von einer Stirnseite des Werkzeugkörpers aus in die innere Werkzeugnut eingebracht sowie, wie vorstehend beschrieben, von der Stirnseite aus bewegt werden kann. Der bzw. die Einschnitte des zweiten Werkzeugteils sind entsprechend derart ausgestaltet, dass sie nicht in die Öffnung hineinragt, sondern eine geringere Höhe in radialer Richtung als die innere Werkzeugnut aufweist. Insbesondere können eine Finne des ersten und ein Einschnitt des zweiten Werkzeugteils nach deren Einbringen in die äußere und innere Werkzeugnuten derart ineinandergreifen, dass ein Entfernen des zweiten Werkzeugteils aus der inneren Werkzeugnut erst nach Entfernen des ersten Werkzeugteils aus der äußeren Werkzeugnut möglich ist. In der Grundkonfiguration vor dem Einbringen in den Stator sind die äußeren und inneren Werkzeugnuten des Werkzeugkörpers vorzugsweise bereits vollständig mit ersten und zweiten Werkzeugteilen bestückt.

Vorzugsweise weist die Spulenfixierung, zumindest wenn diese an einer Stirnseite des Werkzeugkörpers angeordnet ist, von welcher die zweiten Werkzeugteile in den inneren Werkzeugnuten bewegt werden, Durchführungen im jeweiligen Bereich der inneren Werkzeugnuten auf, welche eine Bewegung der zweiten Werkzeugteile unabhängig von der rotatorischen Position der Spulenfixierung relativ zu dem Werkzeugkörper ermöglichen.

Gemäß einer weiteren Weiterbildung des Werkzeugs weist die Spulenfixierung einen mit dem Querschnitt des Werkzeugkörpers im Wesentlichen identischen Querschnitt auf, wobei die äußeren Werkzeugnuten des Werkzeugkörpers und die Fixierungsnuten der Spulenfixierung insbesondere eine größere Breite in Umfangrichtung aufweisen als die Statornuten.

Für eine Lagerung weist die Spulenfixierung entsprechend dem Werkzeugkörper beispielsweise eine um die Rotationsachse symmetrisch angeordnete zylindrische Durchführung zur Aufnahme einer Werkzeugwelle auf, auf welcher die Spulenfixierung drehbar gelagert ist. Dabei kann die Spulenfixierung vorzugsweise gegenüber dem Werkzeugkörper in einer gewünschten rotatorischen Position auf der Werkzeugwelle oder gegenüber dem Werkzeugkörper arretiert werden, sodass sich die Spulenfixierung bei einer Drehbewegung zusammen mit dem Werkzeugkörper dreht.

Ein dritter Aspekt der Erfindung betrifft schließlich eine Verwendung eines erfindungsgemäßen Werkzeugs zum Formen und Einbringen von Spulen in einen Stator einer elektrischen rotierenden Maschine.

Ausführungsbeispiele der Erfindung werden bezugnehmend auf Figuren näher erläutert. Dabei zeigen:
- FIG 1: einen mit Spulen bestückten Stator einer elektrischen rotierenden Maschinen in einer perspektivischen Ansicht,
- FIG 2: das erfindungsgemäßen Werkzeug mit Spulenfixierungen,
- FIG 3: das in dem Statorinnenraum des mit ersten Spulenseiten bestückten Statorkerns angeordnete Werkzeug,
- FIG 4: den Statorkern nach der Drehung des Werkzeugkörpers relativ zu dem Statorkern und mit in Statornuten eingebrachten zweiten Spulenseiten,
- FIG 5: das Werkzeug in einer Schnittdarstellung in einem ersten Zustand, und
- FIG 6: das Werkzeug nach FIG 5 in einem zweiten Zustand.

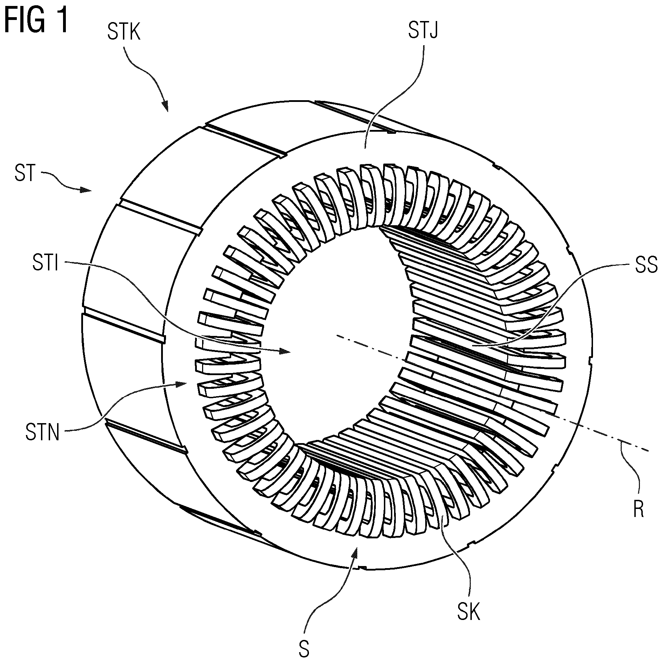

FIG 1 zeigt in einer perspektivischen Ansicht einen beispielhaften Stator ST einer elektrischen rotierenden Maschine. Der Stator ST ist als ein so genannter Außenstator mit einem Statorkern STK aus einem geschichteten Blechpaket verwirklicht, in dessen Statorinnenraum STI ein um eine Rotationsachse R drehbarer Rotor der Maschine anordenbar ist. Der zylindrische Statorinnenraum STI ist in radialer Richtung durch eine Mehrzahl in Umfangrichtung angeordnete Statorzähne sowie in axialer Richtung durch Stirnflächen des Stators ST begrenzt. Die Statorzähne sind ausgehend von einem zylindrischen Statorjoch STJ in radialer Richtung ausgebildet und bilden eine entsprechende Mehrzahl Statornuten STN aus. Die Statornuten STN besitzen über die Länge des Statorinnenraums STI eine grundsätzlich einheitliche Breite in Umfangrichtung sowie eine einheitliche Tiefe in radialer Richtung, wobei sie im Bereich der Nutöffnungen zwischen den Statorzahnköpfen sowie im Bereich der Stirnflächen des Statorkerns STK vollständig offen sind, sodass Spulen S bzw. Spulenseiten SS in radialer Richtung in diese einbringbar sind. Die Tiefe der Statornuten STN ist derart bemessen, dass jeweils zwei Spulenseiten SS bzw. erste und zweite Spulenseiten SS1, SS2 übereinander liegend darin angeordnet werden können. In dem Beispiel der FIG 1 sind in die Statornuten STN bereits vorgeformte Spulen S bzw. Spulenseiten SS eingebracht.

Die Spulen S weisen in einer Grundform jeweils zwei Spulenseiten SS sowie zwei Spulenköpfe SK auf, wobei letztere jeweilige Enden der Spulenseiten SS miteinander verbinden. Weiterhin weist jede Spule S einen Spulenanschluss auf, der im Bereich eines der beiden Spulenköpfe SK angeordnet, in der FIG 1 jedoch nicht speziell dargestellt ist. Die Grundform entspricht dabei einer zweidimensionalen ovalen Form mit zwei parallelen Geradenstücken als Spulenseiten SS und zwei die Geradenstücke verbindenden Kreisbögen in einer Ebene.

Vorzugsweise ragen die Spulenseiten SS bzw. die ersten und zweiten Spulenseiten SS1, SS2 über die Stirnseiten des Statorkerns STK hinaus, d.h. besitzen eine größere Länge als der Statorkern bzw. als die Statornuten, wobei die Überstände der Spulenseiten SS zusammen mit den Kreisbögen die Spulenköpfe SK bilden. Die Spulenköpfe SK weisen vorzugsweise eine Länge und Form auf, die ermöglichen, dass einerseits die Spulenseiten SS in voneinander beabstandete unterschiedliche Statornuten eingebracht werden können, andererseits die Spulenköpfe SK nach dem Einbringen der Spulen S in die Statornuten einen möglichst geringen Überstand in axialer Richtung aufweisen. Für eine elektrische Isolierung und einen mechanischen Schutz wird die Spule S in der Grundform bzw. bereits vor dem Formen in die Grundform mit mindestens einer Lage eines Glimmerbands sowie ergänzend mit einer oder mehreren Lagen eines Gewebebands vollständig umwickelt.

In der FIG 1 sind die Spulen S in den Statornuten angeordnet, wobei das Einbringen der Spulen S in die Statornuten beispielsweise durch eine Montagefachkraft oder automatisiert erfolgt. Die Spulen S sind dabei jeweils derart angeordnet, dass die erste Spulenseite SS1 im Bereich des Nutgrunds der Statornut angeordnet sind, während die zweite Spulenseite SS2 über die radiale Innenseite des Statorkerns STK hinaus in den Statorinnenraum STI hineinragt. Die zweidimensionalen Spulen S weisen somit eine Ausrichtung in axialer AR sowie in radialer Richtung RR auf.

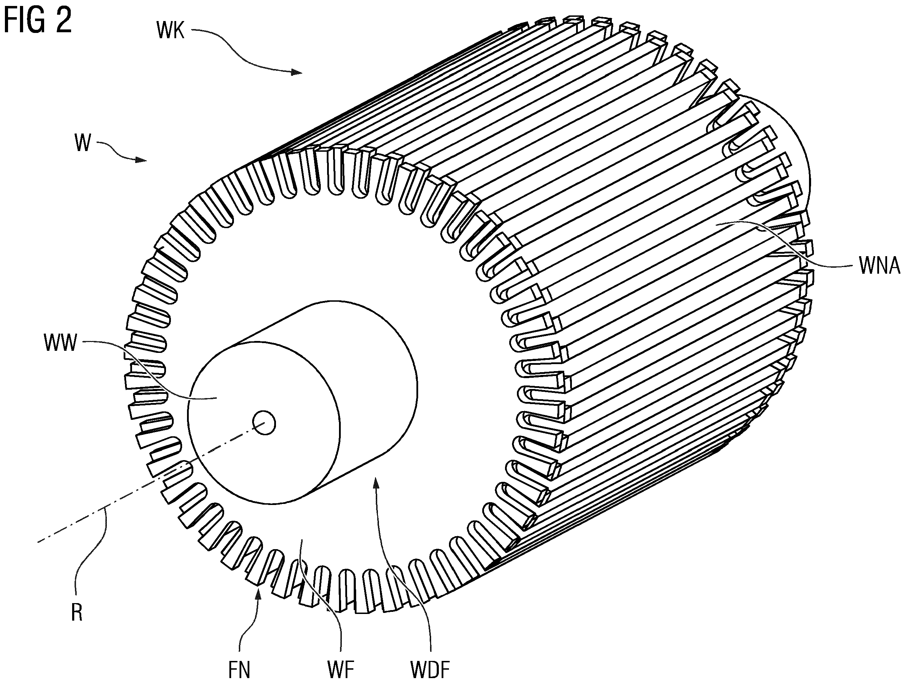

FIG 2 zeigt in einer perspektivischen Ansicht ein beispielhaftes Werkzeug W. Das Werkzeug W weist einen zylindrischen Werkzeugkörper WK auf, welcher beispielsweise aus einem massiven Körper aus Metall oder einer Metalllegierung durch maschinelle Bearbeitung geformt ist. Alternativ kann der Werkzeugkörper WK entsprechend dem Statorkern STK aus einem Blechpaket bestehen, wobei die Ausprägungen in dem Querschnitt des Blechpakets durch Stanzen der Bleche verwirklicht werden. Die Länge des Werkzeugs, W, d.h. die Gesamtlänge des Werkzeugkörpers WK und der an den Stirnseiten angeordneten Spulenfixierungen WF, entspricht beispielsweise zumindest der Länge STL des Statorkerns STK bzw. der Statornuten STN, vorzugsweise überragt das Werkzeug W den Statorkern STK jedoch an jeder Stirnseite um beispielsweise einige Millimeter. Der Außendurchmesser des Werkzeugkörpers WK ist beispielsweise einige Millimeter kleiner als der Innendurchmesser des Statorkerns ST, sodass nach Anordnen des Werkzeugs W in dem Statorinnenraum STI über den gesamten Umfang ein Luftspalt verbleibt.

Der Werkzeugkörper WK weist eine der Anzahl Statornuten STN entsprechende Anzahl äußere Werkzeugnuten WNA auf. Diese sind entsprechend den Statornuten STN beispielsweise über die gesamte Länge des Werkzeugkörpers WK einheitlich ausgebildet, d.h. besitzen eine einheitliche Breite in Umfangrichtung sowie eine einheitliche Tiefe in radialer Richtung. Die Tiefe der äußeren Werkzeugnuten WNA ist derart bemessen, dass sowohl eine zweite Spulenseite SS2 als auch ein erstes Werkzeugteil WT1 übereinander liegend darin angeordnet werden können. Neben der Anzahl äußere Werkzeugnuten WNA weist der Werkzeugkörper WK ergänzend eine Anzahl innere Werkzeugnuten WNI auf, die radial unterhalb der äußeren Werkzeugnuten WNA angeordnet sind und jeweils ein zweites Werkzeugteil WT2 aufnehmen, in FIG 2 jedoch nicht speziell dargestellt sind. Die Anzahl innere Werkzeugnuten WNI entspricht vorzugsweise der Anzahl äußere Werkzeugnuten WNA, alternativ kann jedoch auch eine geringere Anzahl innere Werkzeugnuten WNI vorgesehen sein.

Der Werkzeugkörper WK weist zudem eine zentrale zylindrische Durchführung WDF zur Aufnahme einer Werkzeugwelle WW auf. Die Werkzeugwelle WW dient einerseits der Lagerung des Werkzeugkörpers WK, andererseits ermöglicht sie eine rotatorische Bewegung bzw. eine Drehung des Werkzeugkörpers WK relativ zu dem Stator ST um die Rotationsachse R. Eine drehbare Lagerung des Werkzeugkörpers WK kann dabei derart verwirklicht sein, dass der Werkzeugkörper WK drehbar auf einer starr aufgehängten Werkzeugwelle WW gelagert ist, oder dass der Werkzeugkörper WK drehfest mit einer drehbar gelagerten Werkzeugwelle WW verbunden ist. Alternativ zu einer Durchführung WDF und einer darin angeordneten Werkzeugwelle WW kann ebenso ein jeweiliger Zapfen an einer oder an beiden Stirnseiten des Werkzeugkörpers WK ausgebildet oder mit diesem mechanisch verbunden sein, wobei der Zapfen wiederum drehbar gelagert ist. Alternativ kann ebenso der Werkzeugkörper WK unbeweglich gelagert sein, während der Stator ST beweglich gelagert ist und entsprechend eine relative Drehung zu dem starren Werkzeugkörper WK ausführen kann. Auch eine drehbare Lagerung sowohl des Werkzeugkörpers WK als auch des Stators ST, welche in gleicher Weise eine relative Drehbewegung der beiden zueinander ermöglicht, ist denkbar.

FIG 2 zeigt ergänzend Spulenfixierungen WF, welche jeweils im Bereich einer Stirnseite des Werkzeugkörpers WK angeordnet sind. Eine Spulenfixierung WF weist einen an dem Querschnitt des Werkzeugkörpers WK orientierten Querschnitt auf, wobei beispielsweise der Durchmesser der Spulenfixierung WF sowie die Breite der Fixierungsnuten FN dem Durchmesser des Werkzeugkörpers WK bzw. der Breite der äußeren Werkzeugnuten WNA entspricht. Unterschiedlich kann hingegen beispielsweise die jeweilige Tiefe der Fixierungsnut FN und der äußeren Werkzeugnuten WNA sein, da in der Fixierungsnut FN kein erstes Werkzeugteil WT1 angeordnet ist. Ferner können Öffnungen mit einer hinreichenden Breite und Tiefe in der Spulenfixierung WF im Bereich der inneren Werkzeugnuten WNI des Werkzeugkörpers WK vorgesehen sein, welche eine Bewegung der zweiten Werkzeugteile WT2 in den inneren Werkzeugnuten WNI auch nach einer Drehung der Spulenfixierung WF relativ zu dem Werkzeugkörper WK ermöglichen. Auch können die Fixierungsnuten FN im Bereich der Stirnseiten der Spulenfixierung WF abgerundet sein, d.h. sich entsprechend einem bestimmten Radius weiten, um eine Beschädigung der zweiten Spulenseiten SS2 bzw. deren Isolierung während der Drehung des Werkzeugs W relativ zu dem Stator ST zu vermeiden. Die Spulenfixierungen WF sind vorzugsweise in unmittelbarer Nähe zu der jeweiligen Stirnseite des Werkzeugkörpers WK angeordnet und weisen eine bestimmte Länge bzw. Dicke in axialer Richtung AR auf.

Die Spulenfixierungen WF sind auf der Werkzeugwelle WW bzw. auf einem Zapfen des Werkzeugkörpers WK drehbar gelagert angeordnet, sodass sie gegenüber dem Werkzeugkörper WK jeweils um die Rotationsachse R drehbar sind. In einer Ausgangsposition des Werkzeugs W, in welcher es in den Statorinnenraum STI eingeführt wird, sind die Spulenfixierungen WF bzw. deren Fixierungsnuten FN zunächst derart ausrichtet, dass sie zusammen mit den äußeren Werkzeugnuten WNA des Werkzeugkörpers WK durchgängige Werkzeugnuten einheitlicher Breite bilden. Hierzu können die Spulenfixierungen WF in einer ersten rotatorischen Position relativ zu dem Werkzeugkörper WK arretiert werden.

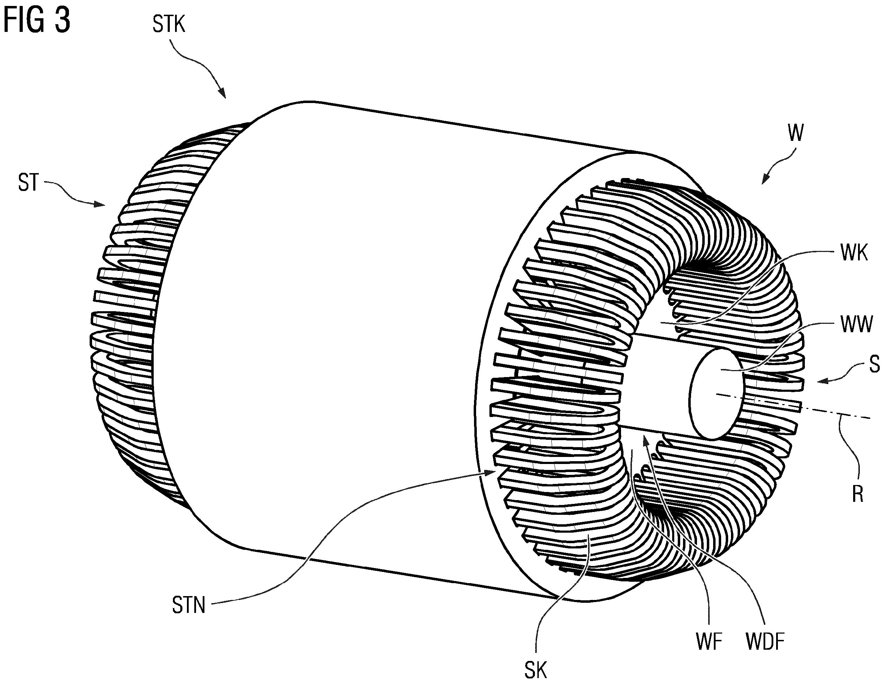

FIG 3 zeigt in einer perspektivischen Ansicht den mit Spulen S bestückten Statorkern STK der FIG 1 in einem Zustand nach einem Einführen des Werkzeugs W in den Statorinnenraum STI, wobei das Werkzeug W beispielsweise von einer Montagefachkraft oder automatisiert über die in der Darstellung sichtbare vordere Stirnseite in den Statorinnenraum STI eingeführt wurde.

Vor dem Einführen in den Statorinnenraum STI wird das Werkzeug W derart gegenüber dem Statorkern STK um die Rotationsachse R gedreht bzw. ausgerichtet, dass die Nutöffnungen der äußeren Werkzeugnuten WNA sowie der Fixierungsnuten FN den Nutöffnungen der Statornuten STN direkt gegenüberliegen, sodass die zweiten Spulenseiten SS2 nachfolgend beschädigungsfrei in die äußeren Werkzeugnuten WNA eingebracht werden können.

Die äußeren Werkzeugnuten WNA weisen beispielsweise eine Breite in Umfangrichtung auf, welche zumindest der Breite der Statornuten STN entspricht. Üblicherweise ist die Breite der Statornuten STN derart dimensioniert, dass die Spulenseiten SS1, SS2 darin kein Spiel aufweisen, auch um eine möglichst optimale Wärmeabfuhr aus den Spulen S in den Statorkern STK während des Betriebs der elektrischen Maschine zu erzielen. Bei einer vorhandenen Nutisolation beispielsweise aus einem Aramidpapier ist deren Dicke entsprechend zu berücksichtigen. Da für die äußeren Werkzeugnuten WNA eine solche Nutisolation nicht erforderlich ist, kann bei einer identischen oder größeren Breite ein ausreichendes Spiel bereitgestellt werden, welches vorteilhaft verhindert, dass die zweiten Spulenseiten SS2 bzw. deren Umwicklung während des Einbringens in die äußeren Werkzeugnuten WNA bzw. während des Einbringens des Werkzeugs W in den Statorinnenraum STI beschädigt werden. Eine solche Beschädigung der zweiten Spulenseiten SS2 wäre insbesondere kritisch, da diese nach dem vollständigen Einbringen der Spulen S in die Statornuten STN optisch nicht mehr erkennbar ist.

Nach dem Anordnen des Werkzeugs W in dem Statorinnenraum STI kann das Werkzeug W zunächst relativ zu dem Stator ST soweit um die Rotationsachse R gedreht werden, dass die zweiten Spulenseiten SS2 an einer radialen Flanke der äußeren Werkzeugnuten WNA anliegen. Dabei erfolgt die Drehung in einer Richtung, in der das Werkzeug W nachfolgend auch relativ zu dem Stator ST gedreht wird, um die Spulenköpfe SK zu formen bzw. den gewünschten Nutsprung zu erzielen. Anschließend werden die Spulenfixierungen WF in der entgegengesetzten Richtung relativ zu dem Werkzeugkörper WK soweit um die Rotationsachse R gedreht, dass die zweiten Spulenseiten SS2 jeweils an der anderen radialen Flanke der Fixierungsnuten FN der Spulenfixierungen WF anliegen. In dieser zweiten rotatorischen Position der Spulenfixierungen WF relativ zu dem Werkzeugkörper WK, wie sie beispielhaft in der FIG 2 dargestellt ist, werden die Spulenfixierungen WF wiederum gegenüber dem Werkzeugkörper WK arretiert. Durch die beiden relativen Drehbewegungen, zunächst des Werkzeugs W zu dem Stator ST und anschließend der Spulenfixierungen WF zu dem Werkzeugkörper WK, werden die zweiten Spulenseiten SS2 in den äußeren Werkzeugnuten WNA des Werkzeugkörpers WK fixiert. Derart fixiert werden die zweiten Spulenseiten SS2 anschließend mittels des Werkzeugs W entsprechend dem Nutsprung zu einer weiteren Statornut bewegt, in welche sie ebenfalls mittels des Werkzeugs W eingebracht werden.

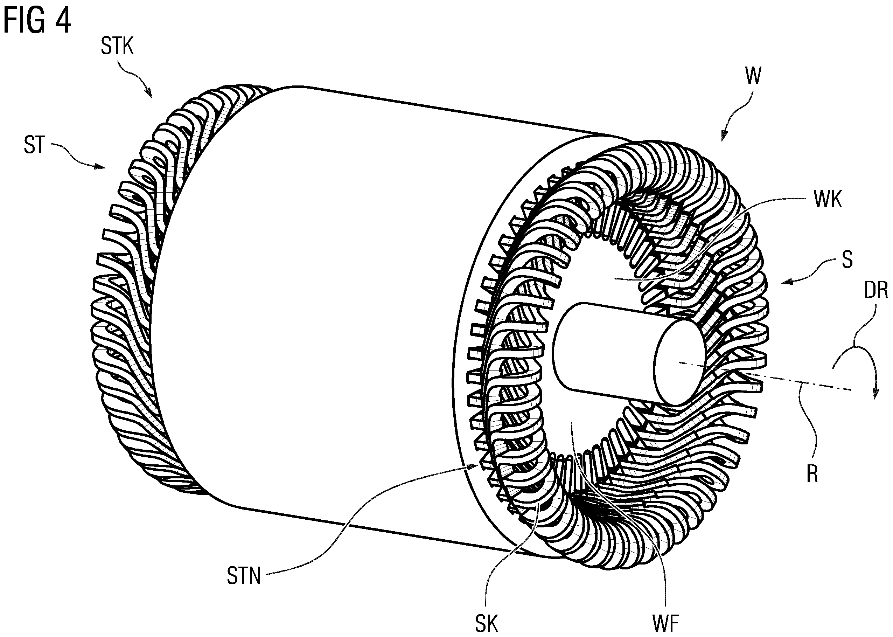

FIG 4 zeigt einen Zustand nach dem Schritt des Ausführens einer Drehbewegung des Werkzeugkörpers WK relativ zu dem Stator ST sowie dem anschließenden Schritt des Einbringens der zweiten Spulenseiten SS2 der Spulen S in die Statornuten STN des Stators ST.

Die Drehbewegung wird ausgeführt, um die äußeren Werkzeugnuten WNA des Werkzeugs W aus einer ersten rotatorischen Position, in welcher die zweiten Spulenseiten SS2 mittels der Spulenfixierungen WF in den äußeren Werkzeugnuten WNA fixiert wurden, in eine zweite rotatorischen Position zu bringen, in welcher die zweiten Spulenseiten SS2 in die Statornuten STN mittels des Werkzeugs W eingebracht werden. Auf diese Weise wird der Nutsprung zwischen den beiden Spulenseiten SS, d.h. der räumliche Abstand der ersten Spulenseite SS1 zu der zweiten Spulenseite SS2 einer Spule S in Umfangrichtung des Statorkerns STK, verwirklicht. Die relative Drehbewegung erfolgt beispielsweise durch eine Drehung des Werkzeugkörpers WK um die Rotationsachse R in der mittels eines Pfeils angegebenen Drehrichtung DR, während der Statorkern STK ortsfest ist. Dabei bewirkt die relative Drehbewegung nicht nur ein Auseinanderbewegen bzw. Spreizen der beiden Spulenseiten SS1, SS2 der jeweiligen Spule S, sondern auch ein dreidimensionales Formen der Spulenköpfe SK. Nach der Drehung wird die Fixierung der zweiten Spulenseiten SS2 durch die Spulenfixierungen wieder gelöst, indem die Spulenfixierungen WF wieder zurück in die erste rotatorische Position relativ zu dem Werkzeugkörper WK und der Werkzeugkörper WK in die entgegengesetzte Richtung soweit wieder um die Rotationsachse R gedreht werden, dass die zweiten Spulenseiten SS2 der Spulen S nicht mehr an radialen Flanken der äußeren Werkzeugnuten WNA anliegen.

Nach der relativen Drehbewegung bzw. dem ersten Formen der Spulenköpfe SK durch Spreizen der beiden Spulenseiten SS1, SS2 der Spulen S werden die zweiten Spulenseiten SS2 in die Statornuten STN eingebracht. Dies erfolgt durch Bewegen der zweiten Spulenseiten SS2 in radialer Richtung mittels des Werkzeugs W. Der Betrag der Bewegung in radialer Richtung ist dabei vorzugsweise derart bemessen, dass die zweiten Spulenseiten SS2 soweit in die Statornuten STN eingebracht werden, dass sie unmittelbar radial oberhalb einer ersten Spulenseiten SS1 angeordnet sind. Da in den Statornuten STN jeweils erste und zweite Spulenseiten SS1, SS2 unterschiedlicher Spulen S angeordnet sind, entspricht deren Annäherung keiner Stauchung der in der Grundform parallelen und beabstandeten Spulenseiten SS1, SS2 einer Spule S, sondern einem weiteren Teilschritt bei der dreidimensionalen Formung der Spulen S. Durch die Bewegung der zweiten Spulenseiten SS2 in radialer Richtung erfolgt somit ein zweites Formen der Spulenköpfe SK der Spulen S.

Nach dem Einbringen der zweiten Spulenseiten SS2 in die Statornuten STN kann das Werkzeug W über eine Stirnseite des Statorkerns STK wieder aus dem Statorinnenraum STI entfernt werden. Hierbei sollte ergänzend sichergestellt werden, dass die geformten Spulenköpfe SK nicht bzw. nur begrenzt radial in den Bereich der Stirnseite des Werkzeugkörpers WK hineinragen und mit diesem kollidieren können. Hierfür können, sofern erforderlich, die Spulenköpfe SK mittels eines geeigneten weiteren Werkzeugs ergänzend in radialer Richtung verformt werden.

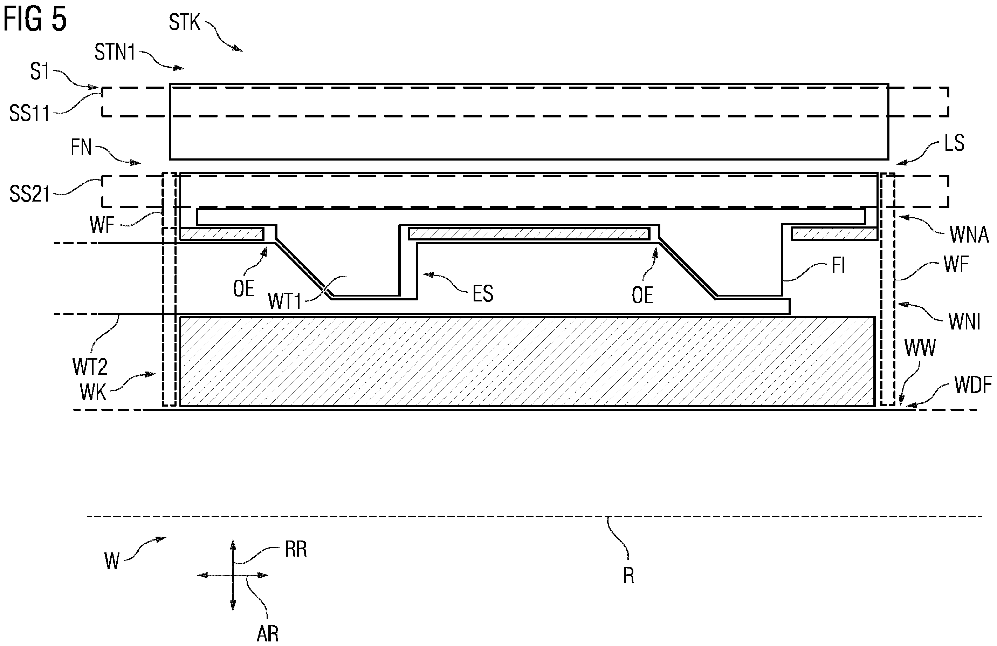

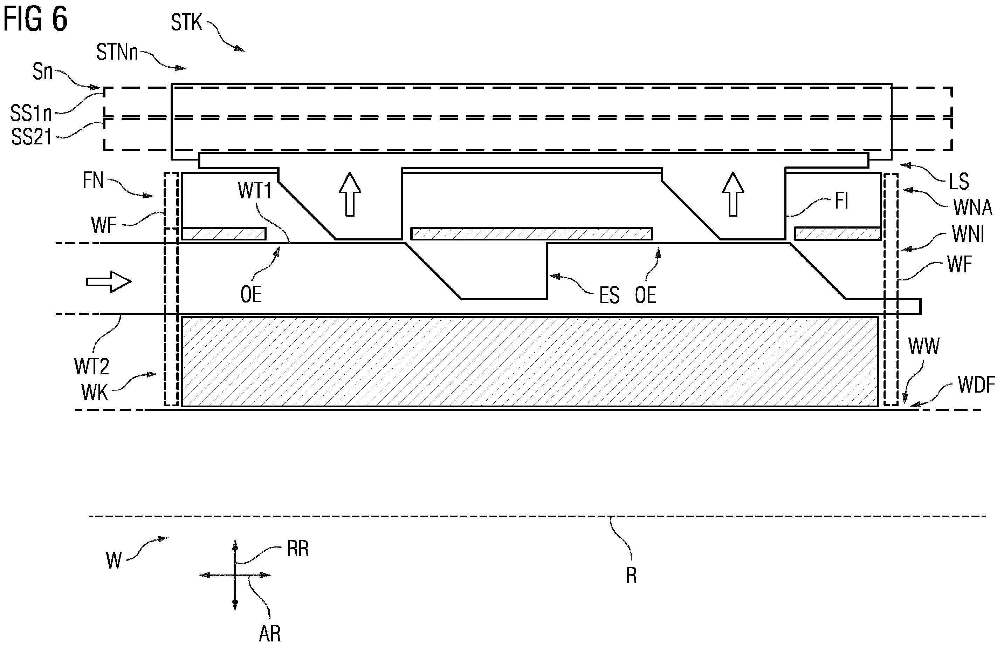

FIG 5 und 6 zeigen jeweils eine schematische Schnittdarstellung des Aufbaus eines erfindungsgemäßen Werkzeugs W insbesondere zur Erläuterung des Ausbringens der zweiten Spulenseiten SS2 einer Spule S aus der äußeren Werkzeugnut WNA des Werkzeugs W mittels erster und zweiter Werkzeugteile WT1, WT2 in eine zweite, um den Nutsprung entfernt von einer ersten Statornut STN1 angeordnete Statornut STNn.

FIG 5 zeigt einen Längsschnitt durch den Werkzeugkörper WK des Werkzeugs W entlang der zentralen Rotationsachse R, wobei der Schnitt mittig durch eine innere WNI und eine äußere Werkzeugnut WNA geht und lediglich der Bereich oberhalb der Rotationsachse R dargestellt ist. Radial oberhalb des Werkzeugkörpers WK bzw. der äußeren Werkzeugnut WNA und durch einen Luftspalt LS getrennt ist eine erste Statornut STN1 des Statorkerns STK ergänzend dargestellt wobei ein Nutgrund im oberen Bereich der ersten Statornut STN1 angeordnet ist. Das Statorjoch STJ des Statorkerns STK ist hingegen nicht gesondert dargestellt.

Das Werkzeug W weist einen zylindrischen Werkzeugkörper WK mit einem bestimmten Durchmesser und einer bestimmten Länge auf, welche an den Innendurchmesser bzw. die Länge des Stators ST angepasst sind. Der Durchmesser des Werkzeugkörpers WK ist dabei derart bemessen, dass die radiale Außenseite des Werkzeugkörpers WK und die radiale Innenseite des Statorkerns STK durch einen über den Umfang des Werkzeugkörpers WK bzw. des Statorkerns STK konstanten bzw. nahezu konstanten Luftspalt LS voneinander beabstandet sind, während die Länge des Werkzeugs W zumindest der Länge des Statorkerns STK entspricht.

Ausgehend von der Rotationsachse R weist der Werkzeugkörper WK eine Durchführung WDF mit einem bestimmten Durchmesser zur Aufnahme einer entsprechend angepassten Werkzeugwelle WW auf, auf welcher der Werkzeugkörper WK drehfest gelagert ist. In radialer Richtung RR oberhalb eines sich beispielhaft über die vollständige Länge erstreckenden Stegs des Werkzeugkörpers WK ist eine durchgängige innere Werkzeugnut WNI angeordnet, welche der Aufnahme eines zweiten Werkzeugteils WT2 dient. Das zweite Werkzeugteil WT2 ist insbesondere derart ausgestaltet, dass es von den Stirnseiten des Werkzeugkörpers WK aus in der inneren Werkzeugnut WNI angeordnet und durch eine Montagefachkraft bzw. automatisiert in dieser in axialer Richtung AR bewegbar ist. Für eine vereinfachte Darstellung sind über die Stirnseite des Werkzeugs W hinausragende Bestandteile des zweiten Werkzeugteils WT2 nicht spezifisch dargestellt.

In radialer Richtung RR oberhalb der inneren Werkzeugnut WNI ist ein weiterer Steg des Werkzeugkörpers WK vorgesehen, welcher die innere Werkzeugnut WNI von der ebenfalls durchgängigen äußeren Werkzeugnut WNA räumlich trennt, wobei die äußere Werkzeugnut WNA wiederum in radialer Richtung RR oberhalb des weiteren Stegs angeordnet ist. Der weitere Steg weist über die Länge des Stegs verteilte Öffnungen OE bzw. Durchbrüche auf, wobei diese beispielsweise im Bereich der Stirnseiten des Werkzeugkörpers WK angeordnet sind. Die Öffnungen OE dienen dazu, die innere WNI und äußere Werkzeugnuten WNA räumlich zu verbinden.

In radialer Richtung RR oberhalb des weiteren Stegs des Werkzeugkörpers WK bzw. im Nutgrund der äußeren Werkzeugnut WNA ist ein erstes Werkzeugteil WT1 angeordnet. Das erste Werkzeugteil WT1 weist an seiner radialen Oberseite eine durchgängige Oberfläche im Bereich der zweiten Spulenseite SS2 der Spule S auf, mittels welcher das erste Werkzeugteil WT1 eine zweite Spulenseite SS2 mechanisch kontaktiert. Weiterhin weist das erste Werkzeugteil WT1 an seiner radialen Unterseite weitere Flächen, mittels derer sich das zweite Werkzeugteil WT2 auf dem weiteren Steg des Werkzeugkörpers WK abstützt, sowie zwei Ausprägungen in radialer Richtung in Form einer jeweiligen Finne FI auf. Die Finnen FI ragen durch die Öffnungen OE in die innere Werkzeugnut WNI hinein und weisen jeweils eine Flanke mit einer bestimmten Steigung bzw. mit einem bestimmten Winkel relativ zu der Rotationsachse R auf.

Das zweite Werkzeugteil WT2 weist entsprechende Einschnitte ES zur Aufnahme der Finnen FI des ersten Werkzeugteils WT1 auf, wobei die Einschnitte jeweils eine Flanke mit einer Steigung aufweisen, welche mit der Steigung der Finnen FI des ersten Werkzeugteils WT1 kompatibel ist. Über die Flanken der Einschnitte ES und Finnen FI stehen das erste WT1 und das zweite Werkzeugteil WT2 miteinander in mechanischem Kontakt.

Alternativ zu der dargestellten räumlichen Trennung der äußeren WNA und inneren Werkzeugnut WNI mittels eines weiteren Stegs mit über die Länge verteilt angeordneten Öffnungen können äußere und innere Werkzeugnut WNA, WNI auch als eine einzige, in radialer Richtung RR vom Nutgrund bis zur Nutöffnung durchgehende Werkzeugnut ausgestaltet sein. In diesem Fall können eine innere und eine äußere Werkzeugnut als Teilbereiche der Werkzeugnut betrachtet werden, welche durch die Anordnung des zweiten bzw. ersten Werkzeugteils unterschieden werden. Eine solche einzige Werkzeugnut kann beispielsweise im Bereich des in FIG 5 dargestellten weiteren Stegs eine Verjüngung aufweisen, welche die Breite in der Werkzeugnut in diesem Bereich über die gesamte Länge des Werkzeugkörpers WK verringert. Diese Verjüngung kann als eine die gesamte Länge der Werkzeugnut umfassende Öffnung betrachtet werden. Das zweite Werkzeugteil WT2 weist gegenüber dieser Verjüngung eine größere Breite auf, welche beispielsweise weitgehend der Breite der Werkzeugnut entspricht. Hierdurch kann das zweite Werkzeugteil WT2 entsprechend in axialer Richtung AR in der inneren Werkzeugnut bewegt werden, jedoch nicht in der radialen Richtung RR. Die Finnen FI des ersten Werkzeugteils WT1 weisen hingegen eine geringere Breite als die Verjüngung auf, sodass sie in radialer Richtung RR bewegbar sind. Vorzugsweise weisen die Finnen FI jedoch im unteren Bereich der Flanken, d.h. im Bereich der Kontaktfläche mit dem Einschnitt ES des zweiten Werkzeugteils WT2 jeweils eine Verdickung bzw. eine größere Breite als die Verjüngung auf. Vorzugsweise ist ebenso der obere Bereich des ersten Werkzeugteils WT1, welcher in Kontakt mit der zweiten Spulenseite SS2 gebracht wird, breiter als die Verjüngung ausgeführt. Ein Profil des ersten Werkzeugteils kann somit weitgehend dem des lateinischen Großbuchstabens I entsprechen.

Eine solche alternative Ausgestaltung der Werkzeugnut sowie der ersten und zweiten Werkzeugteile ermöglicht einerseits, beide Werkzeugteile von einer Stirnseite des Werkzeugkörpers in die Werkzeugnut einzuführen, andererseits ein Herausfallen des ersten Werkzeugteils in radialer Richtung aus der Werkzeugnut zu verhindern. Vorteilhaft können hierdurch alle Werkzeugnuten bereits vor dem Einführen des Werkzeugs in den Statorinnenraum mit ersten und zweiten Werkzeugteilen bestückt werden, weiterhin können die Werkzeugteile in den Werkzeugnuten verbleiben, wenn das Werkzeug wieder aus dem Statorinnenraum entfernt wird.

FIG 5 zeigt einen ersten Zustand des Werkzeugs W, in einer ersten rotatorischen Position relativ zu dem Stator ST, nachdem es in den Statorinnenraum STI des mit ersten Spulenseiten SS1 bestückten Statorkern STK eingeführt wurde. Im ersten Zustand ist das Werkzeug W derart ausgerichtet, dass die Nutöffnungen der äußeren Werkzeugnuten WNA und die Nutöffnungen der Statornuten STN einander gegenüberliegen. Die erste Spulenseite SS11 der Spule S1 ist im Bereich des Nutgrunds der der ersten Statornut STN1 angeordnet, während die dazu parallele zweite Spulenseite SS21, den Luftspalt LS überbrückend, in der äußeren Werkzeugnut WNA des Werkzeugkörpers WK im Bereich der Oberfläche des ersten Werkzeugteils WT1 angeordnet ist. Erste und zweite Werkzeugteile WT1, WT2 befinden sich im ersten Zustand in einer jeweiligen Ausgangsposition, in welcher das erste Werkzeugteil WT1 an dem weiteren Steg des Werkzeugkörpers WK anliegt.

Zur besseren Unterscheidung sind die Spulenseiten SS11, SS21 durch unterbrochene Linien dargestellt, wobei nur jeweils eine Teillänge der Geradenstücke dargestellt ist und die in axialer Richtung AR anschließenden Spulenköpfe SK nicht speziell dargestellt sind. Der für die Spulenseiten und die Spule ergänzend verwendete Index 1 dient als Hinweis darauf, dass die erste Spulenseite und Statornut in FIG 5 von der ersten Spulenseite und Statornut in FIG 6 unterschiedlich sind.

In diesem Zustand bzw. mit dieser Anordnung der ersten und zweiten Spulenseiten SS11, SS21 der Spule S1, bzw. wenn alle Spulen S, mit denen die Statornuten STN des Statorkerns STK bestückt sind, in diesem Zustand sind und mittels der Spulenfixierungen WF an den Stirnseiten des Werkzeugkörpers WK in den äußeren Werkzeugnuten WNA fixiert sind, erfolgt die Drehbewegung des Werkzeugkörpers WK relativ zu dem Statorkern STK um die Rotationsachse R, wodurch die Spulenköpfe SK aller Spulen S gleichzeitig geformt werden.

Nach Abschluss der Drehbewegung entsprechend dem gewünschten Nutsprung sind der Werkzeugkörper WK und der Statorkern STK in einer zweiten rotatorischen Position relativ zueinander angeordnet, wie sie in FIG 6 dargestellt ist. In dieser zweiten rotatorischen Position liegt die äußere Werkzeugnut WNA, in welcher die zweite Spulenseite SS21 eingebracht wurde, einer anderen, zweiten Statornut STNn gegenüber, in welcher eine erste Spulenseite SS1n einer anderen Spule Sn eingebracht wurde. In der zweiten rotatorischen Position werden die Spulenfixierungen WF wieder gelöst, sodass diese keine Kraft mehr auf die zweiten Spulenseiten SS2 ausüben. Wie ebenfalls in FIG 6 dargestellt, erfolgt in der zweiten rotatorischen Position ein Ausbringen der zweiten Spulenseite SS21 aus der äußeren Werkzeugnut WNA und Einbringen dieser in die zweite Statornut STNn. Dies erfolgt durch eine Bewegung des ersten und zweiten Werkzeugteils WT1, WT2 in der respektive äußeren und inneren Werkzeugnut WNA, WNI. Dabei wird, wie mittels eines in die axiale Richtung AR weisenden Pfeils angegeben, das zweite Werkzeugteil WT2 in der inneren Werkzeugnut WNI in axialer Richtung AR bewegt, d.h. tiefer in die innere Werkzeugnut WNI hineingeschoben. Eine hierfür erforderliche Kraft wird ausgehend von der linken Stirnseite des Werkzeugkörpers WK beispielsweise durch eine Montagefachkraft oder maschinell aufgebracht. Die Bewegung des zweiten Werkzeugteils WT2 in axialer Richtung AR bewirkt aufgrund des mechanischen Kontaktes der Flanken der Einschnitte ES des zweiten Werkzeugteils WT2 mit den Flanken der Finnen FI des ersten Werkzeugteils WT1 eine Bewegung des ersten Werkzeugteils WT1 in der äußeren Werkzeugnut WNA in radialer Richtung RR, wie mittels in die radiale Richtung RR weisende Pfeile angegeben. Die Bewegung des ersten Werkzeugteils WT1 in radialer Richtung bewirkt ein Ausbringen der zweiten Spulenseite SS21 aus der äußeren Werkzeugnut WNA und ein Einbringen der zweiten Spulenseite SS21 in die radial gegenüberliegende zweite Statornut STNn.

Durch das Einbringen der zweiten Spulenseite SS21 in die andere Statornut STNn wird auch die darin angeordnete andere erste Spulenseite SS1n weiter in Richtung des Nutgrunds der anderen Statornut STNn bewegt, sofern diese nicht bereits vollständig in dem Nutgrund angeordnet war. Vorzugsweise ist der Hub der Bewegung des ersten Werkzeugteils WT1 in radialer Richtung RR derart bemessen, dass die zweite Spulenseite SS21 über der anderen ersten Spulenseite SS1n, gegebenenfalls durch einen Streifen aus einem Isoliermaterial getrennt, in der anderen Statornut STNn angeordnet wird. Dabei kann die zweite Spulenseite SS2n etwas tiefer als die Nutöffnung der zweiten Statornut STNn eingebracht werden, die Oberfläche des ersten Werkzeugteils WT1 somit bis in die zweite Statornut STNn eingeführt. Dies ermöglicht beispielsweise, nachfolgend im Bereich der Nutöffnung ergänzend einen Nutverschlussstreifen aus einem Isoliermaterial anzuordnen. In der Endposition des ersten Werkzeugteils WT1 können dessen Finnen FI, wie in FIG 6 beispielhaft dargestellt, auf dem zweiten Werkzeugteil WT2 abgestützt sein, wodurch ein gleichmäßiges Einbringen der Spulenseiten SS1n, SS21 über die gesamte Länge der anderen Statornut STNn sichergestellt werden kann. Weiterhin muss in dieser Position keine Kraft in axialer Richtung AR auf das zweite Werkzeugteil WT2 ausgeübt werden.

Nach erfolgtem Einbringen der zweiten Spulenseiten SS2 in die Statornuten STN werden die zweiten Werkzeugteile WT2 wieder in die in FIG 5 dargestellte Ausgangsposition zurückgebracht, sodass keine Krafteinwirkung auf die zweiten Spulenseiten SS2 durch die ersten Werkzeugteile WT1 mehr besteht. In diesem Zustand kann das Werkzeug W wieder über beispielsweise die in FIG 5 und 6 dargestellte linke Stirnseite aus dem Statorinneraum STI entfernt werden.

### Bezugszeichenliste

- AR: Axiale Richtung
- DR: Drehrichtung
- ES: Einschnitt
- FI: Finne
- FN: Fixierungsnut
- LS: Luftspalt
- OE: Öffnung
- R: Rotationsachse
- RR: Radiale Richtung
- S,S1,Sn: Spule
- SK: Spulenkopf
- SS: Spulenseite
- SS1,SS11,SS1n: erste Spulenseite
- SS2,SS21: zweite Spulenseite
- ST: Stator
- STI: Statorinnenraum
- STJ: Statorjoch
- STK: Statorkern
- STN,STN1,STNn: Statornut
- W: Werkzeug
- WDF: (Werkzeug-) Durchführung
- WK: Werkzeugkörper
- WF: Spulenfixierung
- WNA: äußere Werkzeugnut
- WNI: innere Werkzeugnut
- WT1: erstes Werkzeugteil
- WT2: zweites Werkzeugteil
- WW: Werkzeugwelle

## Patentansprüche

1. Verfahren zum Formen und Einbringen von Spulen (S) in einen Stator (ST) einer elektrischen rotierenden Maschine, wobei der Stator (ST) einen Statorkern (STK) zur Aufnahme eines um eine Rotationsachse (R) drehbaren Rotors in einem zylindrischen Statorinnenraum (STI) aufweist, und wobei der Statorkern (STK) an seiner radialen Innenseite eine Mehrzahl Statornuten (STN) zur Aufnahme einer Mehrzahl Spulen (S) aufweist,
mit zumindest folgenden Schritten:
a) Formen der Spulen (S, S1, Sn) in eine jeweilige Grundform, wobei die Grundform eine erste Spulenseite (SS11, SS1n) und eine zweite Spulenseite (SS2, SS21) aufweist, deren Enden durch einen jeweiligen Spulenkopf (SK) miteinander verbunden sind, und die erste Spulenseite (SS1, SS11, SS1n) und die zweite Spulenseite (SS2, SS21) parallel in einer Ebene angeordnet sind,
b) Bestücken der Statornuten (STN) mit den ersten Spulenseiten (SS1, SS11, SS1n),
c) Anordnen, in einer bezüglich der Rotationsachse (R) ersten Position, eines Werkzeugs (W) in dem Stator (ST), wobei das Werkzeug (W) einen zylindrischen Werkzeugkörper (WK) mit einer der Mehrzahl Spulen (S) entsprechenden Mehrzahl äußere Werkzeugnuten (WNA) aufweist, welche die zweiten Spulenseiten (SS2, SS21) aufnehmen, und relativ zu dem Stator (ST) um die Rotationsachse (R) drehbar ist, und wobei das Werkzeug (W) ferner zumindest eine Spulenfixierung (WF) an einer Stirnseite des Werkzeugkörpers (WK) mit einer der Mehrzahl äußere Werkzeugnuten (WNA) entsprechenden Mehrzahl Fixierungsnuten (FN) aufweist,
d) Ausführen einer Drehbewegung des Werkzeugs (W) relativ zu dem Stator (ST) um die Rotationsachse (R), wodurch die Spulenköpfe (SK) geformt werden, und
e) Einbringen, in einer bezüglich der Rotationsachse (R) zweiten Position, der zweiten Spulenseiten (SS2, SS21) in die Statornuten (STN, STNn) mittels des Werkzeugs (W),
wobei
- nach dem Schritt c) und vor dem Schritt d) die zweiten Spulenseiten (SS2, SS21, SS2n) mittels der Spulenfixierung (WF) in den äußeren Werkzeugnuten (WNA) fixiert werden, und nach dem Schritt d) und vor dem Schritt e) die Fixierung wieder gelöst wird,
- wobei die Spulenfixierung (WF) einen mit dem Querschnitt des Werkzeugkörpers (WK) im Wesentlichen identischen Querschnitt aufweist,
- wobei in einer Ausgangsposition des Werkzeugs (W), in welcher es in den Statorinnenraum (STI) eingeführt wird, die Fixierungsnuten (FN) zunächst derart ausrichtet sind, dass sie zusammen mit den äußeren Werkzeugnuten (WNA) des Werkzeugkörpers (WK) durchgängige Werkzeugnuten einheitlicher Breite bilden,
- wobei die Spulenfixierung (WF) ausgestaltet ist, in der ersten Position die zweiten Spulenseiten (SS2, SS21, SS2n) mittels einer Drehung um die Rotationsachse (R) relativ zu dem Werkzeugkörper (WK) in den äußeren Werkzeugnuten (WNA) zu fixieren, und
- wobei die Spulenfixierung (WF) ausgestaltet ist, die zweiten Spulenseiten (SS2, SS21, SS2n) mittels einer Drehung relativ zu dem Werkzeugkörper (WK) in die entgegengesetzte Richtung zu lösen.

2. Verfahren nach Anspruch 1, wobei
das Werkzeug (W) ferner eine Mehrzahl erste Werkzeugteile (WT1), welche in den äußeren Werkzeugnuten (WNA) jeweils radial unterhalb einer zweiten Spulenseite (SS21) bewegbar angeordnet sind, eine Mehrzahl innere Werkzeugnuten (WNI), welche radial unterhalb der äußeren Werkzeugnuten (WNA) in dem Werkzeugkörper (WK) angeordnet sind, und eine Mehrzahl zweite Werkzeugteile (WT2), welche in den inneren Werkzeugnuten (WNI) jeweils bewegbar angeordnet sind, aufweist,
und wobei in Schritt e) von den zweiten Werkzeugteilen (WT2) eine Bewegung ausgeführt wird, welche eine Bewegung der ersten Werkzeugteile (WT1) in radialer Richtung (RR) bewirkt, wodurch die zweiten Spulenseiten (SS2, SS21) in die Statornuten (STN, STNn) eingebracht werden.

3. Verfahren nach Patentanspruch 1 oder 2, wobei in Schritt e) die zweiten Spulenseiten (SS2, SS21) gleichzeitig oder nacheinander, insbesondere aufgeteilt in Gruppen einer jeweiligen Mehrzahl Spulen (S), in die Statornuten (STN, STNn) eingebracht werden.

4. Verfahren nach einem der Patentansprüche 1 bis 3, wobei in Schritt a) die Spulen (S) jeweils aus zumindest einer Windung eines Flachdrahts in die Grundform geformt werden, wobei der Flachdraht insbesondere eine Querschnittsfläche im Bereich zwischen einschließlich 4 mm² und einschließlich 30mm² aufweist.

5. Verfahren nach einem der Patentansprüche 1 bis 4, wobei die äußeren Werkzeugnuten (WNA) des Werkzeugkörpers (WK) und die Fixierungsnuten (FN) der Spulenfixierung (WF) jeweils eine größere Breite in Umfangrichtung als die Statornuten (STN) aufweisen, und die Spulenfixierung (WF) zum Fixieren der zweiten Spulenseiten (SS2, SS21) relativ zu dem Werkzeugkörper (WK) um die Rotationsachse (R) gedreht wird.

6. Werkzeug (W) zum Formen und Einbringen von Spulen (S) in einen Stator (ST) einer elektrischen rotierenden Maschine, wobei der Stator (ST) einen Statorkern (STK) aufweist, dessen zylindrischer Statorinnenraum (STI) einer Aufnahme eines um eine Rotationsachse (R) drehbaren Rotors der Maschine dient und an dessen radialen Innenseite Statornuten (STN) zur Aufnahme erster und zweiter Spulenseiten (SS1, SS2, SS11, SS1n, SS21) einer Mehrzahl Spulen (S) ausgebildet sind,
wobei das Werkzeug (W) zumindest aufweist:
- einen zylindrischen Werkzeugkörper (WK), welcher in dem ringförmigen Stator (ST) anordenbar und relativ zu dem Stator (ST) um eine Rotationsachse (R) drehbar ist,
- eine Mehrzahl äußere Werkzeugnuten (WNA), welche an einer radialen Außenseite des Werkzeugkörpers (WK) angeordnet und jeweils ausgestaltet sind, zumindest ein innerhalb der äußeren Werkzeugnut (WNA) in radialer Richtung (RR) bewegbares erstes Werkzeugteil (WT1) sowie radial oberhalb des zumindest einen ersten Werkzeugteils (WT1) eine zweite Spulenseite (SS21) einer Spule (S1) aufzunehmen, und
- zumindest eine Spulenfixierung (WF) mit einer der Mehrzahl äußere Werkzeugnuten (WNA) entsprechenden Mehrzahl Fixierungsnuten (FE), wobei die Spulenfixierung (WF) an einer Stirnseite des Werkzeugkörpers (WK) angeordnet und relativ zu dem Werkzeugkörper (WK) um die Rotationsachse (R) drehbar ist,
wobei
- die äußeren Werkzeugnuten (WNA) ferner jeweils ausgestaltet sind, die zweite Spulenseite (SS21) in einer bezüglich der Rotationsachse (R) ersten Position des Werkzeugkörpers (WK) relativ zu dem Stator (ST) aufzunehmen, wobei eine erste Spulenseite (SS11) der Spule (S1) in einer Statornut (STN1) verbleibt,
- der Werkzeugkörper (WK) ferner ausgestaltet ist, eine Drehung von der ersten Position zu einer bezüglich der Rotationsachse (R) zweiten Position relativ zu dem Stator (ST) auszuführen, um die erste und zweite Spulenseiten (SS1, SS2, SS11, SS21) jeweils verbindenden Spulenköpfe (SK) der Spulen (S, S1) zu formen,
- die ersten Werkzeugteile (WT1) ferner jeweils ausgestaltet sind, in der zweiten Position mittels einer Bewegung in radialer Richtung (RR) die zweite Spulenseite (SS21) der Spule (S1) in eine Statornut (STNn) einzubringen, wobei
- die Spulenfixierung (WF) ausgestaltet ist, in der ersten Position die zweiten Spulenseiten (SS2, SS21) mittels einer Drehung um die Rotationsachse (R) relativ zu dem Werkzeugkörper (WK) in den äußeren Werkzeugnuten (WNA) zu fixieren,
- wobei die Spulenfixierung (WF) einen mit dem Querschnitt des Werkzeugkörpers (WK) im Wesentlichen identischen Querschnitt aufweist,
- wobei in einer Ausgangsposition des Werkzeugs (W), in welcher es in den Statorinnenraum (STI) eingeführt wird, die Fixierungsnuten (FN) zunächst derart ausrichtet sind, dass sie zusammen mit den äußeren Werkzeugnuten (WNA) des Werkzeugkörpers (WK) durchgängige Werkzeugnuten einheitlicher Breite bilden, und
- wobei die Spulenfixierung (WF) ausgestaltet ist, die zweiten Spulenseiten (SS2, SS21, SS2n) mittels einer Drehung relativ zu dem Werkzeugkörper (WK) in die entgegengesetzte Richtung zu lösen.

7. Werkzeug (W) nach Patentanspruch 6, wobei das Werkzeug (W) ferner aufweist:
- eine Mehrzahl innere Werkzeugnuten (WNI), welche radial unterhalb der äußeren Werkzeugnuten (WNA) in dem Werkzeugkörper (WK) angeordnet sind, und
- eine Mehrzahl zweite Werkzeugteile (WT2), welche in den inneren Werkzeugnuten (WNI) jeweils bewegbar angeordnet sind, wobei die ersten und zweiten Werkzeugteile (WT1, WT2) jeweils ausgestaltet sind, mittels einer Bewegung des zweiten Werkzeugteils (WT2) die Bewegung des ersten Werkzeugteils (WT1) in der äußeren Werkzeugnut (WNA) in radialer Richtung (RR) zu bewirken, wobei die zweiten Werkzeugteile (WT2) insbesondere von zumindest einer Stirnseite des Werkzeugkörpers (WK) aus bewegbar sind.

8. Werkzeug (W) nach Patentanspruch 7, wobei
die ersten Werkzeugteile (WT1) jeweils zumindest eine Finne (FI) und die zweiten Werkzeugteile (WT2) jeweils zumindest einen Einschnitt (ES) aufweisen, wobei die Finne (FI) und der Einschnitt (ES) ausgestaltet sind, dass eine Bewegung des zweiten Werkzeugteils (WT2) in axialer Richtung (AR) die Bewegung des ersten Werkzeugteils (WT1) in radialer Richtung (RR) bewirkt.

9. Werkzeug (W) nach Patentanspruch 8, wobei
in dem Werkzeugkörper (WK) zwischen einer äußeren Werkzeugnut (WNA) und einer inneren Werkzeugnut (WNI) ein Steg angeordnet ist, wobei der Steg zumindest eine Öffnung (OE) aufweist, welche die äußere Werkzeugnut (WNA) mit der inneren Werkzeugnut (WNI) räumlich verbindet, und
die zumindest eine Finne (FI) des ersten Werkzeugteils (WT1) ausgestaltet ist, durch die Öffnung (OE) hindurch in die innere Werkzeugnut (WNI) zu ragen.

10. Werkzeug (W) nach Patentanspruch 9, wobei die Spulenfixierung (WF) einen mit dem Werkzeugkörper (WK) im Wesentlichen identischen Querschnitt aufweist, wobei die äußeren Werkzeugnuten (WNA) des Werkzeugkörpers (WK) und die Fixierungsnuten (FN) der Spulenfixierung (WF) insbesondere eine größere Breite in Umfangrichtung aufweisen als die Statornuten (STN)WF.

11. Verwendung eines Werkzeugs (W) nach einem der Patentansprüche 6 bis 10 zum Formen und Einbringen von Spulen (S) in einen Stator (ST) einer elektrischen rotierenden Maschine.

## Claims

1. Method for shaping and introducing coils (S) into a stator (ST) of an electric rotating machine, wherein the stator (ST) has a stator core (STK) for accommodating a rotor, which can rotate about an axis of rotation (R), in a cylindrical stator interior (STI), and wherein the stator core (STK) has a plurality of stator slots (STN) on its radial inner side for accommodating a plurality of coils (S),
with at least the following steps:
a) shaping the coils (S, S1, Sn) into a respective basic shape, wherein the basic shape has a first coil side (SS11, SS1n) and a second coil side (SS2, SS21), the ends of which are interconnected by a respective coil head (SK), and the first coil side (SS1, SS11, SS1n) and the second coil side (SS2, SS21) are arranged in parallel in a plane,
b) populating the stator slots (STN) with the first coil sides (SS1, SS11, SS1n),
c) arranging a tool (W) in the stator (ST) in a first position in relation to the axis of rotation (R), wherein the tool (W) has a cylindrical tool body (WK) with a plurality of outer tool slots (WNA) corresponding to the plurality of coils (S), which accommodate the second coil sides (SS2, SS21), and is able to rotate relative to the stator (ST) about the axis of rotation (R), and wherein the tool (W) further has at least one coil fastening (WF) on an end face of the tool body (WF) with a plurality of fastening slots (FN) corresponding to the plurality of outer tool slots (WNA),
d) carrying out a rotary movement of the tool (W) relative to the stator (ST) about the axis of rotation (R), whereby the coil heads (SK) are shaped, and
e) introducing the second coil sides (SS2, 5521) into the stator slots (STN, STNn) in a second position in relation to the axis of rotation (R) by means of the tool (W), wherein
- after step c) and before step d) the second coil sides (SS2, SS21, SS2n) are fastened in the outer tool slots (WNA) by means of the coil fastening (WF), and after step d) and before step e) the fastening is released again,
- wherein the coil fastening (WF) has a cross-section that is substantially identical to the cross-section of the tool body (WK),
- wherein, in an initial position of the tool (W), in which it is introduced into the stator interior (STI), the fastening slots (FN) are initially oriented in such a manner that they form continuous tool slots with a uniform width together with the outer tool slots (WNA) of the tool body (WK),
- wherein the coil fastening (WF) is embodied to fasten the second coil sides (SS2, SS21, SS2n) in the outer tool slots (WNA) in the first position by means of a rotation about the axis of rotation (R) relative to the tool body (WK), and
- wherein the coil fastening (WF) is embodied to release the second coil sides (SS2, SS21, SS2n) by means of a rotation relative to the tool body (WK) in the opposite direction.

2. Method according to claim 1, wherein
the tool (W) further has a plurality of first tool parts (WT1), which are arranged in the outer tool slots (WNA) in each case radially below a second coil side (SS21) in a movable manner, a plurality of inner tool slots (WNI), which are arranged radially below the outer tool slots (WNA) in the tool body (WK), and a plurality of second tool parts (WT2), which are arranged in the inner tool slots (WNI) in each case in a movable manner,
and wherein in step e) a movement is carried out by the second tool parts (WT2), which causes a movement of the first tool parts (WT1) in the radial direction (RR), whereby the second coil sides (SS2, SS21) are introduced into the stator slots (STN, STNn).

3. Method according to claim 1 or 2, wherein
in step e) the second coil sides (SS2, SS21) are introduced into the stator slots (STN, STNn) simultaneously or in succession, in particular divided into groups of a respective plurality of coils (S).

4. Method according to one of claims 1 to 3, wherein
in step a) the coils (S) are each shaped into the basic shape from at least one winding of a flat wire, wherein the flat wire in particular has a cross-sectional area in the range between 4 mm² and 30 mm², inclusive in each case.

5. Method according to one of claims 1 to 4,
wherein the outer tool slots (WNA) of the tool body (WK) and the fastening slots (FN) of the coil fastening (WF) each have a greater width in the circumferential direction than the stator slots (STN), and the coil fastening (WF) is rotated relative to the tool body (WK) about the axis of rotation (R) in order to fasten the second coil sides (SS2, SS21).

6. Tool (W) for shaping and introducing coils (S) into a stator (ST) of an electric rotating machine, wherein the stator (ST) has a stator core (STK), the cylindrical stator interior (STI) of which is used to accommodate a rotor, which can rotate about an axis of rotation (R), of the machine and stator slots (STN) are embodied on the radial inner side thereof for accommodating first and second coil sides (SS1, SS2, SS11, SS1n, SS21) of a plurality of coils (S),
wherein the tool (W) at least has:
- a cylindrical tool body (WK), which can be arranged in the annular stator (ST) and can be rotated relative to the stator (ST) about an axis of rotation (R),
- a plurality of outer tool slots (WNA), which are arranged on a radial outer side of the tool body (WK) and are in each case embodied to accommodate at least one first tool part (WT1), which is able to move within the outer tool slot (WNA) in the radial direction (RR), as well as a second coil side (SS21) of a coil (S1) radially above the at least one first tool part (WT1), and
- at least one coil fastening (WF) with a plurality of fastening slots (FE) corresponding to the plurality of outer tool slots (WNA), wherein the coil fastening (WF) is arranged on an end face of the tool body (WK) and is able to rotate relative to the tool body (WK) about the axis of rotation (R),
wherein
- the outer tool slots (WNA) are furthermore in each case embodied to accommodate the second coil side (SS21) in a first position of the tool body (WK), in relation to the axis of rotation (R), relative to the stator (ST), wherein a first coil side (SS11) of the coil (S1) remains in a stator slot (STN1),
- the tool body (WK) is furthermore embodied to carry out a rotation from the first position to a second position, in relation to the axis of rotation (R), relative to the stator (ST), in order to shape coil heads (SK), which connect the first and second coil sides (SS1, SS2, SS11, SS21) in each case, of the coils (S, S1),
- the first tool parts (WT1) are furthermore in each case embodied to introduce the second coil side (SS21) of the coil (S1) into a stator slot (STNn) in the second position by means of a movement in the radial direction (RR),
wherein
- the coil fastening (WF) is embodied, in the first position, to fasten the second coil sides (SS2, SS21) in the outer tool slots (WNA) by means of a rotation about the axis of rotation (R) relative to the tool body (WK),
- wherein the coil fastening (WF) has a cross-section that is substantially identical to the cross-section of the tool body (WK),
- wherein in an initial position of the tool (W), in which it is introduced into the stator interior (STI), the fastening slots (FN) are initially oriented in such a manner that they form continuous tool slots with a uniform width together with the outer tool slots (WNA) of the tool body (WK),
and
- wherein the coil fastening (WF) is embodied to release the second coil sides (SS2, SS21, SS2n) by means of a rotation relative to the tool body (WK) in the opposite direction.

7. Tool (W) according to claim 6, wherein the tool (W) further has:
- a plurality of inner tool slots (WNI), which are arranged radially below the outer tool slots (WNA) in the tool body (WK), and
- a plurality of second tool parts (WT2), which are arranged in the inner tool slots (WNI) in each case in a movable manner, wherein the first and second tool parts (WT1, WT2) are in each case embodied to cause the movement of the first tool part (WT1) in the outer tool slot (WNA) in the radial direction (RR) by means of a movement of the second tool part (WT2), wherein the second tool parts (WT2) in particular can be moved from at least one end face of the tool body (WK).

8. Tool (W) according to claim 7, wherein
the first tool parts (WT1) each have at least one fin (FI) and the second tool parts (WT2) each have at least one indentation (ES), wherein the fin (FI) and the indentation (ES) are embodied such that a movement of the second tool part (WT2) in the axial direction (AR) causes the movement of the first tool (WT1) in the radial direction (RR).

9. Tool (W) according to claim 8, wherein
a web is arranged in the tool body (WK) between an outer tool slot (WNA) and an inner tool slot (WNI), wherein the web has at least one opening (OE), which spatially connects the outer tool slot (WNA) to the inner tool slot (WNI), and
the at least one fin (FI) of the first tool part (WN1) is embodied to protrude through the opening (OE) into the inner tool slot (WNI).

10. Tool (W) according to claim 9, wherein
the coil fastening (WF) has a cross-section that is substantially identical to the cross-section of the tool body (WK), wherein the outer tool slots (WNA) of the tool body (WK) and the fastening slots (FN) of the coil fastening (WF) in particular have a greater width in the circumferential direction than the stator slots (STN)WF.

11. Use of a tool (W) according to one of claims 6 to 10 for shaping and introducing coils (S) into a stator (ST) of an electric rotating machine.

## Revendications

1. Procédé de mise en forme et d'introduction de bobines (S) dans un stator (ST) d'une machine électrique tournante, dans lequel le stator (ST) a un noyau (STK) statorique de réception d'un rotor tournant autour d'un axe (R) de rotation dans un espace (STI) intérieur statorique cylindrique, et dans lequel le noyau (STK) statorique a, sur sa face intérieure radiale, une pluralité d'encoches (STN) statoriques de réception d'une pluralité de bobines (S),
comprenant au moins les stades suivants :
a) mise en forme des bobines (S, S1, Sn) dans une forme de base respective, dans lequel la forme de base a une première face (SS11, SS1n) de bobine et une deuxième face (SS2, SS21) de bobine, dont les extrémités sont reliées entre elles par une tête (SK) de bobine respective et la première face (SS1, SS11, SS1n) de bobine et la deuxième face (SS2, SS21) de bobine sont disposées parallèlement dans un plan,
b) équipement des encoches (STN) statoriques par les premières faces (SS1, SS11, SS1n) de bobines,
c) montage, dans une première position par rapport à l'axe (R) de rotation, d'un outil (W) dans le stator (ST), dans lequel l'outil (W) a un corps (WK) d'outil cylindrique ayant une multiplicité, correspondante à la multiplicité de bobines (S), d'encoches (WNA) extérieures d'outil, qui reçoivent les deuxièmes faces (SS2, SS21) de bobines, et qui est tournant par rapport au stator (ST) autour de l'axe (R) de rotation, et dans lequel l'outil (W) a en outre au moins une fixation (WF) de bobine d'un côté frontal du corps (WK) de l'outil ayant une multiplicité, correspondant à la multiplicité d'encoches (WNA) extérieures de l'outil, d'encoches (FN) de fixation,
d) exécution d'un mouvement de rotation de l'outil (W) par rapport au stator (ST) autour de l'axe (R) de rotation, grâce à quoi les têtes (SK) de bobine sont formées, et
e) introduction, dans une deuxième position par rapport à l'axe (R) de rotation, des deuxièmes faces (SS2, SS21) de bobine dans les encoches (STN, STNn) statoriques au moyen de l'outil (W),
dans lequel
- après le stade c) et avant le stade d), on fixe les deuxièmes faces (SS2, SS21, SS2n) de bobine au moyen de la fixation (WF) de bobine dans les encoches (WNA) extérieures de l'outil, et après le stade d) et avant le stade e), on redéfait la fixation,
- dans lequel la fixation (WF) de bobine a une section transversale sensiblement identique à la section transversale du corps (WK) de l'outil,
- dans lequel, dans une position initiale de l'outil (W), dans laquelle il est inséré dans l'espace (STI) intérieur statorique, les encoches (FN) de fixation sont orientées d'abord de façon à ce qu'elles forment, ensemble avec les encoches (WNA) d'outil extérieures du corps (WK) de l'outil, des encoches d'outil interconnectées de largeur unitaire,
- dans lequel la fixation (WF) de bobine est conformée pour, dans la première position, fixer les deuxièmes faces (SS2, SS21, SS2n) de bobine au moyen d'une rotation autour de l'axe (R) de rotation par rapport au corps (WK) de l'outil dans les encoches (WNA) extérieures de l'outil, et
- dans lequel la fixation (WF) de bobine est conformée pour libérer les deuxièmes faces (SS2, SS21, SS2n) de bobine au moyen d'une rotation par rapport au corps (WK) de l'outil dans le sens contraire.

2. Procédé suivant la revendication 1, dans lequel l'outil (W) a en outre une pluralité de premières parties (WT1) d'outil, qui sont, dans les encoches (WNA) extérieures de l'outil, disposées en étant mobiles respectivement radialement en-dessous d'une deuxième face (SS21) de bobine, une pluralité d'encoches (WNI) intérieures d'outil, qui sont disposées dans le corps (WK) de l'outil radialement en-dessous des encoches (WNA) extérieures de l'outil, et une pluralité de deuxièmes parties (WT2) d'outil, qui sont disposées en étant respectivement mobiles dans les encoches (WNI) intérieures de l'outil,
et dans lequel, dans le stade e), on exécute, par les deuxièmes parties (WT2) de l'outil, un déplacement, qui provoque un déplacement des premières parties (WT1) de l'outil dans la direction (RR) radiale, grâce à quoi les deuxièmes faces (SS2, SS21) de bobine sont insérées dans les encoches (STN, STNn) statoriques.

3. Procédé suivant la revendication 1 ou 2, dans lequel dans le stade e), on introduit, dans les encoches (STN, STNn) statoriques, les deuxièmes faces (SS2, SS21) de bobine en même temps ou l'une après l'autre, en particulier de manière répartie en groupes d'une multiplicité respective de bobines (S).

4. Procédé suivant l'une des revendications 1 à 3, dans lequel dans le stade a), on met en forme, dans la forme de base, les bobines (S) respectivement en au moins un enroulement d'un fil plat, dans lequel le fil plat a en particulier une surface de section transversale dans la plage comprise entre y compris 4 mm² et y compris 30 mm².

5. Procédé suivant l'une des revendications 1 à 4, dans lequel les encoches (WNA) extérieures d'outil du corps (WK) de l'outil et les encoches (FN) de fixation de la fixation (WF) de bobine ont respectivement une largeur plus grande dans la direction périphérique que les encoches (STN) statoriques et, pour fixer les deuxièmes faces (SS2, SS21) de bobine, on fait tourner la fixation (WF) de bobine autour de l'axe (R) de rotation par rapport au corps (WK) de bobine.

6. Outil (W) de mise en forme et d'introduction de bobines (S) dans un stator (ST) d'une machine électrique tournante, dans lequel le stator (ST) a un noyau (STK) statorique, dont l'espace (STI) intérieur statorique cylindrique sert à la réception d'un rotor tournant autour d'un axe (R) de rotation de la machine et, sur sa face intérieure radiale, sont constituées des encoches (STN) statoriques de réception de premières et deuxièmes faces (SS1, SS2, SS11, SS1n, SS21) de bobine d'une pluralité de bobines (S), dans lequel l'outil (W) a au moins :
- un corps (WK) cylindrique d'outil, qui peut être disposé dans le stator (ST) annulaire et qui peut tourner par rapport au stator (ST) autour d'un axe (R) de rotation,
- une pluralité d'encoches (WNA) extérieures d'outil, qui sont disposées sur une face extérieure radiale du corps (WK) de l'outil et qui sont conformées respectivement pour recevoir au moins une première partie (WT1) de l'outil mobile dans la direction (RR) radiale dans l'encoche (WNA) extérieure d'outil, ainsi qu'une deuxième face (SS21) d'une bobine (S1) radialement au-dessus de la au moins une première partie (WT1) d'outil, et
- au moins une fixation (WF) de bobine ayant une pluralité d'encoches (FE) de fixation correspondant à la pluralité d'encoches (WNA) extérieures d'outil, dans lequel la fixation (WF) de bobine est disposée sur un côté frontal du corps (WK) de l'outil et peut tourner par rapport au corps (WK) de l'outil autour de l'axe (R) de rotation,
dans lequel
- les encoches (WNA) extérieures d'outil sont conformées en outre respectivement pour recevoir les deuxièmes faces (SS21) de bobine dans une première position, rapportée à l'axe (R) de rotation, du corps (WK) de l'outil par rapport au stator (ST), dans lequel une première face (SS11) de la bobine (S1) reste dans une encoche (STN1) statorique,
- le corps (WK) de l'outil est conformé en outre pour exécuter une rotation de la première position à une deuxième position, rapporté à l'axe (R) de rotation relativement au stator (ST), afin de former des têtes (SK) de bobine (S, S1) reliant respectivement les premières et deuxièmes faces (SS1, SS2, SS11, SS21) de bobine,
- les premières parties (WT1) de l'outil sont conformées en outre respectivement pour, dans la deuxième position, introduire, au moyen d'un déplacement dans la direction (RR) radiale, la deuxième face (SS21) de la bobine (S1) dans une encoche (STNn) statorique,
dans lequel
- la fixation (WF) de bobine est conformée pour, dans la première position, fixer les deuxièmes faces (SS2, SS21) de bobine, au moyen d'une rotation autour de l'axe (R) de rotation relativement au corps (WK) de l'outil, dans les encoches (WNA) extérieures de l'outil,
- dans lequel la fixation (WF) de bobine a une section transversale sensiblement identique à la section transversale du corps (WK) de l'outil,
- dans lequel, dans une position initiale de l'outil (W), dans laquelle il est inséré dans l'espace (STI) intérieur statorique, les encoches (FN) de fixation sont orientées, d'abord de façon à ce qu'elles forment, ensemble avec les encoches (WNA) d'outil extérieures du corps (WK) de l'outil, des encoches d'outil interconnectées de largeur unitaire,
et
- dans lequel la fixation (WF) de bobine est conformée pour libérer les deuxièmes faces (SS2, SS21, SS2n) de bobine au moyen d'une rotation par rapport au corps (WK) de l'outil dans le sens contraire.

7. Outil (W) suivant la revendication 6, dans lequel l'outil (W) a en outre :
- une pluralité d'encoches (WNI) intérieures d'outil, qui sont disposées radialement en-dessous des encoches (WNA) extérieures de l'outil dans le corps (WK) de l'outil, et
- une pluralité de deuxièmes parties (WT2) d'outil, qui sont disposées en étant respectivement mobiles dans les encoches (WNI) intérieures d'outil, dans lequel les premières et les deuxièmes parties (WT1, WT2) de l'outil sont conformées respectivement pour, au moyen d'un déplacement de la deuxième partie (WT2) de l'outil, provoquer le déplacement de la première partie (WT1) de l'outil dans les encoches (WNA) extérieures de l'outil dans la direction (RR) radiale, dans lequel les deuxièmes parties (WT2) d'outil sont mobiles, en particulier à partir d'au moins un côté frontal du corps (WK) de l'outil.

8. Outil (W) suivant la revendication 7, dans lequel les premières parties (WT1) d'outil ont respectivement au moins une aile (FI) et les deuxièmes parties (WT2) d'outil ont respectivement au moins une entaille (ES), dans lequel les ailes (FI) et les entailles (ES) sont conformées de manière à ce qu'un déplacement de la deuxième partie (WT2) d'outil, dans la direction (AR) axiale, provoque le déplacement de la première partie (WT1) d'outil dans la direction (RR) radiale.

9. Outil (W) suivant la revendication 8, dans lequel dans le corps (WK) de l'outil est disposée, entre une encoche (WNA) extérieure de l'outil et une encoche (WNI) intérieure de l'outil, une entretoise, dans lequel l'entretoise a au moins une ouverture (OE), qui met en communication dans l'espace l'encoche (WNA) extérieure de l'outil avec l'encoche (WNI) intérieure de l'outil, et
la au moins une aile (FI) de la première partie (WT1) de l'outil est conformée de manière à pénétrer par l'ouverture (OE) dans l'encoche (WNI) intérieure de l'outil.

10. Outil (W) suivant la revendication 9, dans lequel la fixation (WF) de bobine a une section transversale sensiblement identique à celle du corps (WK) de l'outil, dans lequel les encoches (WNA) extérieures de l'outil du corps (WK) de l'outil et les encoches (FN) de la fixation (WF) de bobine ont en particulier une largeur plus grande dans la direction du pourtour que les encoches (STN)WF statoriques.

11. Utilisation d'un outil (W) suivant l'une des revendications 6 à 10 pour la mise en forme et l'introduction de bobines (S) dans un stator (ST) d'une machine électrique tournante.
